(19)

Europäisches
Patentamt
European
Patent Office
Office européen
des brevets

(11)  **EP 4 632 457 A2**

(12)  **EUROPEAN PATENT APPLICATION**

(43) Date of publication:
**15.10.2025  Bulletin 2025/42**

(21) Application number: **25198548.7**

(22) Date of filing: **27.08.2025**

(51) International Patent Classification (IPC):
*G02B 9/64* (2006.01)     *G02B 13/00* (2006.01)
*G02B 13/04* (2006.01)     *G02B 13/06* (2006.01)

(52) Cooperative Patent Classification (CPC):
**G02B 13/0045; G02B 9/64; G02B 13/04;
G02B 13/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **31.10.2024  CN 202411545209**

(71) Applicant: **Jiangxi OFILM Optical Co., Ltd.
Nanchang, Jiangxi 330096 (CN)**

(72) Inventors:
• **LAN, Binli
  Shenzhen, 518106 (CN)**
• **ZHU, Xingxing
  Nanchang, 330096 (CN)**
• **ZENG, Han
  Nanchang, 330096 (CN)**

(74) Representative: **Metida
Gyneju str. 16
01109 Vilnius (LT)**

(54)  **OPTICAL LENS, IMAGE MODULE, AND TERMINAL DEVICE**

(57)     An optical lens (100) includes: a first lens (L1), a second lens (L2) and a sixth lens (L6) each having negative refractive power, and a third lens (L3), a fourth lens (L4), a fifth lens (L5), and a seventh lens (L7) each having positive refractive power. Near the optical axis (O), object side surfaces (S1, S5, S13) of the first lens (L1), the third lens (L3) and the seventh lens (L7), an imaging side surface (S4) of the second lens (L2), an object side surface (S7) and an imaging side surface (S8) of the fourth lens (L4), an object side surface (S9) and an imaging side surface (S10) of the fifth lens (L5) are both convex, imaging side surfaces (S2, S6, S14) of the first lens (L1), the third lens (L3) and the seventh lens (L7), an object side surface (S3) of the second lens (L2), an object side surface (L11) and an imaging side surface (L12) of the sixth lens (L6) are both concave. The optical lens (100) satisfies: 140°<FOV<150°, and 7.2<TTL/F<7.6.

FIG. 1

EP 4 632 457 A2

**Description**

FIELD

The present invention relates to field of imaging, and in particular to an optical lens, an image module, and a terminal device.

BACKGROUND

With the continuous improvement of people's demands for driving safety and the continuous maturation of ADAS (Advanced Driver Assistance System) technology, the market demand for in-vehicle cameras has seen explosive growth. Through front-view, rear-view, and surround-view in-vehicle lenses installed on vehicles, comprehensive information about the vehicle's interior and exterior can be obtained, thereby helping drivers take correct driving action. Therefore, the adaptability of the lenses to the environment and the stability of their imaging have become crucial for ensuring driving safety.

The ADAS has extremely high requirements for the in-vehicle lenses it carries. Firstly, they must have strong light transmission capabilities to adapt to changes in the brightness of the external environment. Secondly, they need to have high imaging clarity to effectively distinguish details of the road environment. Thirdly, they should have a large field of view to better capture road information in front of the vehicle, thereby meeting the special requirements of intelligent driving systems. Additionally, due to the limited installation space in in-vehicle systems, the size of the lenses used in vehicles cannot be too large.

SUMMARY

According to various embodiments of the present application, an optical lens, an image module, and a terminal device are provided to have a large field of view while maintaining high imaging quality.

In order to achieve the above objects, in a first aspect, the present application discloses an optical lens. The optical lens sequentially includes a first lens, a second lens, a third lens, a fourth lens, a fifth lens, a sixth lens, a seventh lens, and an image plane along an optical axis from an object side to an imaging side. The first lens has negative refractive power, an object side surface of the first lens is convex near the optical axis, and an imaging side surface of the first lens is concave near the optical axis. The second lens has negative refractive power, an object side surface of the second lens is concave near the optical axis, and an imaging side surface of the second lens is convex near the optical axis. The third lens has positive refractive power, an object side surface of the third lens is convex near the optical axis, an imaging side surface of the third lens is concave near the optical axis. The fourth lens has positive refractive power, an object side surface of the fourth lens is convex near the optical axis, an imaging side surface of the fourth lens is convex near the optical axis. The fifth lens has positive refractive power, an object side surface of the fifth lens is convex near the optical axis, an imaging side surface of the fifth lens is convex near the optical axis. The sixth lens has negative refractive power, an object side surface of the sixth lens is concave near the optical axis, an imaging side surface of the sixth lens is concave near the optical axis. The seventh lens has positive refractive power, an object side surface of the seventh lens is convex near the optical axis, an imaging side surface of the seventh lens is concave near the optical axis. The optical lens satisfies following conditional expressions: $140°<FOV<150°$, and $7.2<TTL/F<7.6$. Wherein, FOV is the maximum field of view of the optical lens, TTL is a distance from the object side surface of the first lens to the image plane of the optical lens along the optical axis, F is an effective focal length of the optical lens.

In the above optical lens, the first lens has negative refractive power, with the surface shape design where the object side surface is convex near the optical axis and the imaging side surface is concave near the optical axis, which allows the first lens to receive incident light at a larger angle and expands the field of view of the optical lens to obtain a wide field of view feature, and at the same time, reduces the sensitivity of the optical lens and improves the imaging quality of the optical lens. The second lens has negative refractive power, with the surface shape design where the object side surface is concave near the optical axis and the imaging side surface is convex near the optical axis, which allows the incident light at a larger angle to be transitioned more gently. The positive refractive power of the third lens and the fourth lens can balance the aberration generated by the incident light after passing through the first lens and the second lens, and further converge the incident light, which can shorten the total optical length of the optical lens and achieve a miniaturized design of the optical lens. Moreover, the positive refractive power of the third lens and the fourth lens with the surface shape design where the object side surface and the imaging side surface of the third lens are convex and concave respectively and both the object side surface and the imaging side surface of the fourth lens are convex, can allow the incident light at a larger angle to be transitioned more gently, increase the relative illuminance of the optical lens, and reduce the tolerance sensitivity of the optical lens. The fifth lens with positive refractive power and the sixth lens with negative refractive power can balance the aberration generated by each other, reduce the tolerance sensitivity of the optical lens, and improve the imaging quality of the optical lens. The seventh lens has positive refractive power, and with the surface shape design where the object side surface and the imaging side surface are convex and concave respectively, which can effectively correct the aberration generated by the optical lens, reduce distortion, and allow the MTF (modulation transfer function) curve of the optical lens more concentrated to improve the imaging clarity of the optical lens.

**When 140°<FOV<150°, the optical lens has a relatively large field of view, which is beneficial for the** optical lens to obtain more scene content, thereby enriching the imaging information of the optical lens. When TTL/F is in a range of 7.2 to 7.6, a ratio of a total length of the optical lens to the focal length can be controlled within a reasonable range, which not only enables the miniaturization of the optical lens to be achieved, but also helps to better converge the light on the image plane, thereby improving the imaging quality of the optical lens.

In a second aspect, the present application discloses an image module. The image module includes a photosensitive chip and the above-mentioned optical lens, the photosensitive chip is arranged on the imaging side of the optical lens. The image module with the above-mentioned optical lens can achieve a miniaturized design of the optical lens, and at the same time, the optical lens has the characteristic of a large field of view, thereby improving the imaging quality of the optical lens.

In a third aspect, the present application discloses a terminal device. The terminal device includes a housing and the above-mentioned image module, the image module is arranged in the housing. The terminal device with the above-mentioned image module can achieve a miniaturized design of the optical lens, and at the same time, the optical lens has the characteristic of a large field of view, thereby improving the imaging quality of the optical lens.

BRIEF DESCRIPTION OF THE DRAWINGS

FIG. 1 is a schematic structure diagram of an optical lens of a first embodiment of the present application.
FIG. 2 is a longitudinal spherical aberration diagram, astigmatism curve diagram and distortion diagram of the optical lens of the first embodiment of the present application.
FIG. 3 is a schematic structure diagram of an optical lens of a second embodiment of the present application.
FIG. 4 is a longitudinal spherical aberration diagram, astigmatism curve diagram and distortion diagram of the optical lens of the second embodiment of the present application.
FIG. 5 is a schematic structure diagram of an optical lens of a third embodiment of the present application.
FIG. 6 is a longitudinal spherical aberration diagram, astigmatism curve diagram and distortion diagram of the optical lens of the third embodiment of the present application.
FIG. 7 is a schematic structure diagram of an optical lens of a fourth embodiment of the present application.
FIG. 8 is a longitudinal spherical aberration diagram, astigmatism curve diagram and distortion diagram of the optical lens of the fourth embodiment of the present application.
FIG. 9 is a schematic structure diagram of an optical lens of a fifth embodiment of the present application.
FIG. 10 is a longitudinal spherical aberration diagram, astigmatism curve diagram and distortion diagram of the optical lens of the fifth embodiment of the present application.
FIG. 11 is a schematic structure diagram of an optical lens of a sixth embodiment of the present application.
FIG. 12 is a longitudinal spherical aberration diagram, astigmatism curve diagram and distortion diagram of the optical lens of the sixth embodiment of the present application.
FIG. 13 is a schematic diagram of an image module of an embodiment of the present application.
FIG. 14 is a schematic diagram of a terminal device of an embodiment of the present application.

DETAILED DESCRIPTION

The following will describe the technical solutions of the embodiments of the present disclosure clearly and completely in combination with the accompanying drawings of the embodiments of the present disclosure. Obviously, the described embodiments are only part of the embodiments of the present disclosure, not all of them. Based on the embodiments of the present disclosure, those skilled in the art can make various modifications or variations without departing from the spirit or scope of the present disclosure. All other embodiments obtained by persons of ordinary skill in the art without making creative efforts fall within the scope of protection of the present disclosure.

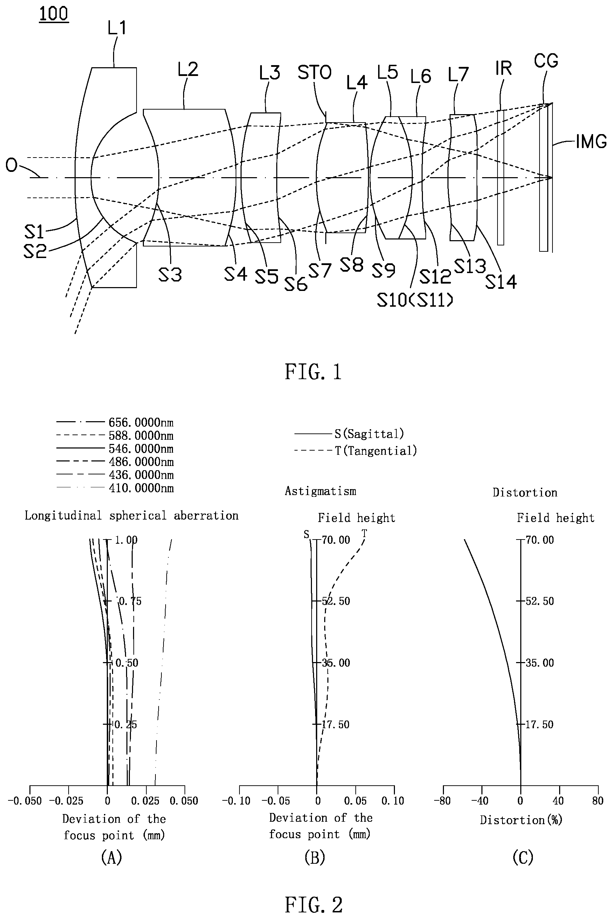

Referring to FIG. 1, in some embodiments of the present application, an optical lens 100 sequentially includes a first lens L1, a second lens L2, a third lens L3, a fourth lens L4, a fifth lens L5, a sixth lens L6 and a seventh lens L7 along an optical axis O from an object side to an imaging side. During imaging, light enters the first lens L1, the second lens L2, the third lens L3, the fourth lens L4, the fifth lens L5, the sixth lens L6 and the seventh lens L7 in that sequence from the object side of the first lens L1 and finally forms an image on an image plane IMG of the optical lens 100.

Further, The first lens L1 has negative refractive power, the second lens L2 has negative refractive power, third lens L3 has positive refractive power, the fourth lens L4 has positive refractive power, the fifth lens L5 has positive refractive power, the sixth lens L6 has negative refractive power, and the seventh lens L7 has positive refractive power.

Further, an object side surface S1 of the first lens L1 is convex near the optical axis O, an imaging side surface S2 of the first lens L1 is concave near the optical axis O, an object side surface S3 of the second lens L2 is concave near the optical axis O, an imaging side surface S4 of the second lens L2 is convex near the optical axis O, an object side surface S5 of the third lens L3 is convex near the optical axis O, an imaging side surface S6 of the third lens L3 is concave near the optical axis O, an object side surface S7 of the fourth lens L4 is convex near the optical axis O, an imaging side surface S8 of the fourth lens L4 is convex near the optical axis O, an object side surface S9 of the fifth lens L5 is convex near the optical axis O, an imaging side surface S10 of the fifth lens L5 is convex near the optical axis O, an object side surface S11 of the sixth lens L6 is concave near the optical axis O, an imaging side surface S12 of the sixth lens L6 is concave near the optical axis O, an object side surface S13 of the seventh lens L7 is convex near the optical axis O, an imaging side surface S14 of the seventh lens L7 is concave near the optical axis O.

In the above optical lens 100, the first lens L1 has negative refractive power, with the surface shape design where the object side surface S1 is convex near the optical axis O and the imaging side surface S2 is concave near the optical axis O, which allows the first lens L1 to receive incident light at a larger angle and expands the field of view of the optical lens 100 to obtain a wide field of view feature, and at the same time, reduces the sensitivity of the optical lens 100 and improves the imaging quality of the optical lens 100. The second lens L2 has negative refractive power, with the surface shape design where the object side surface S3 is concave near the optical axis O and the imaging side surface S4 is convex near the optical axis O, which allows the incident light at a larger angle to be transitioned more gently. The positive refractive power of the third lens L3 and the fourth lens L4 can balance the aberration generated by the incident light after passing through the first lens L1 and the second lens L2, and further converge the incident light, which can shorten the total optical length of the optical lens 100 and achieve a miniaturized design of the optical lens 100. Moreover, the positive refractive power of the third lens L3 and the fourth lens L4 with the surface shape design where the object side surface S5 and the imaging side surface S6 of the third lens L3 are convex and concave respectively and both the object side surface S7 and the imaging side surface S8 of the fourth lens L4 are convex, can allow the incident light at a larger angle to be transitioned more gently, increase the relative illuminance of the optical lens 100, and reduce the tolerance sensitivity of the optical lens 100. The fifth lens L5 with positive refractive power and the sixth lens L6 with negative refractive power can balance the aberration generated by each other, reduce the tolerance sensitivity of the optical lens 100, and improve the imaging quality of the optical lens 100. The seventh lens L7 has positive refractive power, and with the surface shape design where the object side surface S13 and the imaging side surface S14 are convex and concave respectively, which can effectively correct the aberration generated by the optical lens 100, reduce distortion, and allow the MTF (modulation transfer function) curve of the optical lens 100 more concentrated to improve the imaging clarity of the optical lens 100.

In some embodiments, when the optical lens 100 is applied to automobiles or electronic devices such as vehicle-mounted devices and dash cameras, the first lens L1, the second lens L2, the third lens L3, the fourth lens L4, the fifth lens L5, the sixth lens L6, and the seventh lens L7 may be made of glass, which can not only provide good optical effects but also reduce the influence of temperature on the above lenses. Of course, among the above multiple lenses of the optical lens 100, some lenses may be made of glass and some may be made of plastic, which can not only ensure the reduction of the influence of temperature on the lenses to achieve better imaging effects, but also reduce the processing cost and the weight of the lenses to reduce the processing cost of the optical lens 100 and the overall weight of the optical lens 100. Additionally, it can be understood that when the optical lens 100 is applied to electronic devices such as smart phones and smart tablets, the materials of the first lens L1, the second lens L2, the third lens L3, the fourth lens L4, the fifth lens L5, the sixth lens L6, and the seventh lens L7 may be plastic to reduce the overall weight of the optical lens 100.

In some embodiments, spherical lenses have the advantages of simple manufacturing process and low production cost, and can facilitate flexible design of the surface shape of the lens and the improvement of the imaging resolution of the optical lens 100. Aspheric lenses can provide more flexible design for the object side surface or the imaging side surface of the lens, allowing the lens to solve problems such as unclear imaging, distorted view, or narrow field of view even when it is small and thin, moreover, the optical lens 100 can have good imaging quality without setting too many lenses, which is beneficial for shortening the length of the optical lens 100. Based on this, the first lens L1, the second lens L2, the fifth lens L5, and the sixth lens L6 may be spherical lenses, and the seventh lens L7 may be an aspheric lens. In this way, through the combination of spherical and aspheric designs, not only the processability of each lens can be improved, which is beneficial for surface shape design, but also the object side surface or imaging side surface of the lens can have more flexible designs, allowing each lens to solve problems such as unclear imaging, distorted view, or narrow field of view even when it is small and thin. Moreover, the optical lens 100 can have good imaging quality without setting too many lenses, which is beneficial for shortening the length of the optical lens 100. It can be understood that in some embodiments, the surfaces of each lens in the optical lens 100 may be all spherical surfaces, all aspheric surfaces, or any combination of spherical surface and aspheric surface, and the specific choice can be made according to actual needs, so no specific limitations are made in this embodiment.

In some embodiments, the optical lens 100 may further include an aperture STO, and the aperture STO which may be an aperture diaphragm and/or a field diaphragm. For example, the aperture STO may be an aperture diaphragm, or the aperture STO may be a field diaphragm, or the aperture STO may be formed by an aperture diaphragm and a field diaphragm. By arranging the aperture STO between the imaging side surface S6 of the third lens L3 and the object side surface S7 of the fourth lens L4, the exit pupil can be moved away from the image plane IMG, thereby reducing the effective diameter of the optical lens 100 without reducing the telecentricity of the optical lens 100, so that the miniaturization is achieved. It can be understood that in some embodiments, the aperture STO may also be set between other lenses, and the location of the aperture STO can be adjusted according to the actual situation, and no specific limitations are made in this embodiment.

In some embodiments, the optical lens 100 may further include a filter IR, which is arranged between the seventh lens L7 and the image plane IMG of the optical lens 100. In some embodiments, the filter IR may be an infrared cut-off filter to filter out infrared light and allow visible light to pass through, thereby allowing the imaging more in line with human visual experience and improving the imaging quality. In some embodiments, the filter IR may be an infrared bandpass filter to allow infrared light to pass through and reflect visible light, thereby achieving infrared imaging of the optical lens 100, allowing the optical lens 100 to image and obtain good imaging quality in low-light environments or special application scenarios. It can be understood that the filter IR may be made of plastic, optical glass with a coating, or other materials, and the specific choice can be made according to actual needs, and no specific limitations are made in this embodiment.

In some embodiments, the optical lens 100 may further include a protective glass CG, which is arranged between the filter IR and the image plane IMG of the optical lens 100, thereby protecting a photosensitive chip and preventing dust. The protective glass CG may be made of plastic, optical glass with a coating, or other materials, and the specific choice can be made according to actual needs, and no specific limitations are made in this embodiment. It can be understood that the protective glass CG can be a part of the optical lens 100 or removed from the optical lens 100. However, when the protective glass CG is removed, the total optical length of the optical lens 100 remains unchanged.

In some embodiments, the optical lens 100 may satisfy the following conditional expression: **140°≤FOV≤150°.** Wherein, FOV is the maximum field of view angle of the optical lens 100. **When** 140°<FOV<150°, the optical lens 100 has a relatively large field of view, which is beneficial for the optical lens 100 to obtain more scene content, thereby enriching the imaging information of the optical lens 100.

In some embodiments, the optical lens 100 may satisfy the following conditional expression: 7.2<TTL/F<7.6. Wherein, TTL is a distance from the object side surface S1 of the first lens L1 to the image plane IMG of the optical lens 100 along the optical axis O (that is, a total length of the optical lens 100), and F is an effective focal length of the optical lens 100. When the above conditional expression is satisfied, a ratio of a total length of the optical lens 100 to the focal length can be controlled within a reasonable range, which not only enables the miniaturization of the optical lens 100 to be achieved, but also helps to better converge the light on the image plane IMG, thereby improving the imaging quality of the optical lens 100.

In some embodiments, the optical lens 100 may satisfy the following conditional expression: 6<TTL/ImgH<6.6. Wherein, TTL is the distance from the object side surface S1 of the first lens L1 to the image plane IMG of the optical lens 100 along the optical axis O, and ImgH is a radius of the maximum effective imaging circle on the image plane IMG of the optical lens 100. When the optical lens 100 satisfies the above conditional expression, in combination with the reasonable configuration of the refractive power of each lens, the optical lens 100 can achieve good thinness and lightness, have good aberration balance and imaging quality improvement capabilities, and at the same time, support high-pixel photosensitive chips. Additionally, ImgH can determine the size of the photosensitive chip. The larger ImgH is, the larger the maximum size of the photosensitive chip that can be supported. If exceeding the upper limit of the above conditional expression, although the optical lens 100 can achieve good aberration balance and resolution, as the photosensitive chip increases in size, the total optical length will be difficult to compress, resulting in a decrease in the thinness and lightness of the optical lens 100. If below the lower limit of the above conditional expression, the optical lens 100 can have good thinness and lightness, but the overall size being too small will greatly limit the balance of aberration, the matching of the photosensitive chip, and the optimization of resolution.

In some embodiments, the optical lens 100 may satisfy the following conditional expression: 1.1<ImgH/F<1.3. ImgH is the radius of the maximum effective imaging circle on the image plane IMG of the optical lens 100, and F is the effective focal length of the optical lens 100. When the optical lens 100 satisfies the above conditional expression, it can effectively correct the distortion produced by the optical lens 100, thereby reducing the manufacturing difficulty of the optical lens 100 while improving the imaging quality of the optical lens 100; in addition, it can help control the focal length of the optical lens 100 within a reasonable range and ensure that the optical lens 100 has sufficient light-receiving area and sufficient field of view angle, thereby simultaneously meeting the characteristics of a large field of view angle and a large image plane.

In some embodiments, the optical lens 100 may satisfy the following conditional expression: 7<TTL/CT4<0. Wherein, TTL is the distance from the object side surface S1 of the first lens L1 to the image plane 101 of the optical lens 100 along the optical axis O, and CT4 is a thickness of the fourth lens L4 at the optical axis O. By controlling the ratio of the total length of the optical lens 100 to the thickness of the fourth lens L4 at the optical axis O, it is beneficial for the reasonable allocation of the entire optical lens 100 space, so that the structure of the optical lens 100 is more compact. When exceeding the upper limit of the above conditional expression, the total length of the optical lens 100 is too long, which is not conducive to a compact structure. When below the lower limit of the above conditional expression, the fourth lens L4 is too thick, the risk of light bending is increased, thereby increasing the eccentricity sensitivity between lenses, which is not conducive to the assembly of the optical lens 100.

In some embodiments, the optical lens 100 may satisfy the following conditional expression: - 6<CT2/SAG21<-4. Wherein, CT2 is a thickness of the second lens L2 at the optical axis O, and SAG21 is a distance from the maximum effective aperture of the object side surface S3 of the second lens L2 to an intersection point of the object side surface S3 of the second lens L2 and the optical axis O along the optical axis O. When the optical lens 100 satisfies the above conditional expression, it can effectively avoid the difficulty in manufacturing the lens caused by the excessive thickness of the second lens L2 or the excessive curvature of the object side surface S3 of the second lens L2, thereby reducing the production cost.

In some embodiments, the optical lens 100 may satisfy the following conditional expression: -10<F2/CT2<-8. Wherein, F2 is an effective focal length of the second lens L2, and CT2 is the thickness of the second lens L2 at the optical axis O. When the optical lens 100 satisfies the above conditional expression, by reasonably configuring the effective focal length of the second lens L2 and the thickness of the second lens L2 at the optical axis O, it can effectively correct the aberration of the optical lens 100 and improve the imaging quality.

In some embodiments, the optical lens 100 may satisfy the following conditional expression: 2<SAG12/-SAG11<3. Wherein, SAG12 is a distance from the maximum effective aperture of the imaging side surface S2 of the first lens L1 to an intersection point of the imaging side surface S2 of the first lens L1 and the optical axis O along the optical axis O, and SAG11 is a distance from the maximum effective aperture of the object side surface S1 of the first lens L1 to an intersection point of the object side surface S1 of the first lens L1 and the optical axis O along the optical axis O. By controlling a ratio of a vector height at the maximum effective aperture of the object side surface S1 of the first lens L1 to a vector height at the maximum effective aperture of the imaging side surface S2 of the first lens L1 within a reasonable range, a reasonable surface shape can be obtained, and the surface shapes of the object side surface S1 and the imaging side surface S2 of the first lens L1 can be made similar. In this way, on the one hand, it can smoothly transition the peripheral light rays, thereby facilitating the control of the light rays to enter the optical lens 100 at a smaller deflection angle, reducing the field curvature and distortion of the optical lens 100, and improving the resolution of the optical lens 100; and on the other hand, it is beneficial to reduce the sensitivity of the first lens L1, lower the processing difficulty of the first lens L1, and facilitate the processing and molding of the first lens L1. When exceeding the upper limit or the lower limit of the above conditional expression, the surfaces of the first lens L1 are too curved or too flat, thereby resulting in an increase in the processing difficulty of the first lens L1 and an increase in the production cost of the first lens L1; at the same time, it is also prone to edge aberration, which is not conducive to improving the imaging quality of the optical lens 100.

In some embodiments, the optical lens 100 may satisfy the following conditional expression: -2<F1/F<-1.5. Wherein, F1 is an effective focal length of the first lens L1, and F is the effective focal length of the optical lens 100. Since the first lens L1 is the first lens of the optical lens 100 closest to the object side and provides negative refractive power, the limitation of the above conditional expression can enhance the aberration correction capability of the optical lens 100, improve the imaging resolution of the optical lens 100 while reducing the sensitivity of the optical lens 100, and thereby improve the imaging quality of the optical lens 100.

In some embodiments, the optical lens 100 may satisfy the following conditional expression: 80>|F56/F|>10. Wherein, F56 is a combined effective focal length of the fifth lens L5 and the sixth lens L6, and F is the effective focal length of the optical lens 100. In some embodiments, 18<|F56/F|<60. Since the fifth lens L5 has positive refractive power and the sixth lens L6 has negative refractive power, the combination of the positive and negative refractive powers of the fifth lens L5 and the sixth lens L6 can greatly correct chromatic aberration in the optical lens 100. Controlling the combined effective focal length of the fifth lens L5 and the sixth lens L6 and the focal length of the optical lens 100 within the specified range can ensure the maximum effect of aberration correction, thereby further improving the imaging quality. **When |F56/F|≤10, the absolute value of the combined effective focal length of the fifth** lens L5 and the sixth lens L6 is too small, and the combined refractive power of the fifth lens L5 and the sixth lens L6 is too large, which may cause severe astigmatism in the fifth lens L5 and the sixth lens L6, thereby affecting the imaging quality of the optical lens 100.

In some embodiments, the fifth lens L5 and the sixth lens L6 may be cemented together, which is beneficial for further enhancing the chromatic aberration elimination and spherical aberration correction effects of the optical lens 100. In some embodiments, the optical lens 100 may satisfy the following conditional expression: -40<F123/F<-1. Wherein, F123 is a combined effective focal length of the first lens L1, the second lens L2, and the third lens L3, and F is the effective focal length of the optical lens 100. When the optical lens 100 satisfies the above conditional expression, it can reasonably control the configuration relationship between the combined effective focal length of the first lens L1, the second lens L2, and the third lens L3 and the total effective focal length of the optical lens 100. On the one hand, it ensures that the refractive power intensity of a front lens group of the optical lens 100 is not too large, so that the optical lens 100 will not produce overly severe aberrations when receiving light from large angles; on the other hand, it is also beneficial for balancing the aberrations between the positive and negative lenses within the front lens group, thereby enhancing the resolution and improving the imaging quality.

In some embodiments, the optical lens 100 may satisfy the following conditional expression: 1<SD32/SD41<1.2. Wherein, SD32 is half of the maximum effective aperture of the imaging side surface S6 of the third lens L3, and SD41 is half of the maximum effective aperture of the object side surface S7 of the fourth lens L4. When the optical lens 100 satisfies the above conditional expression, it can reasonably configure the surface shape of the imaging side surface S6 of the third lens L3 and the object side surface S7 of the fourth lens L4, reduce the deflection angle of the light when it enters the fourth lens L4 after exiting the third lens L3, thereby effectively correcting aberration and improving the assembly yield of the optical lens 100.

In some embodiments, the optical lens 100 may satisfy the following conditional expression: 0.95<SD51/SD42<1.1. Wherein, SD51 is half of the maximum effective aperture of the object side surface S9 of the fifth lens L5, and SD42 is half of the maximum effective aperture of the imaging side surface S8 of the fourth lens L4. When the optical lens 100 satisfies the above conditional expression, the aperture of the imaging side surface S8 of the fourth lens L4 and the aperture of the object side surface S9 of the fifth lens L5 can be reasonably configured, which is conducive to the large imaging surface characteristics of the optical lens 100. Thus, when this optical lens 100 is applied to the image module, it can match the large-sized photosensitive chip, thereby improving the imaging quality of the optical lens 100.

In some embodiments, the optical lens 100 may satisfy the following conditional expression: 1.4<SD11/ImgH<1.55. Wherein, SD11 is half of the maximum effective aperture of the object side surface S1 of the first lens L1, and ImgH is the radius of the maximum effective imaging circle on the image plane IMG of the optical lens 100. When the optical lens 100 satisfies the above conditional expression, the first lens L1 is matched with the semi-field height (i.e., half of the image height corresponding to the maximum field of view angle of the optical lens 100), thereby controlling the aperture of the first lens L1 to achieve a balance between illuminance, field of view angle, and total optical length. If exceeding the upper limit or the lower limit of the above conditional expression, the maximum effective aperture of the first lens L1 will be too large or too small, which will cause a large step difference between each lens and the image plane IMG, which is not conducive to the assembly of the optical lens 100 and the design of the support between the lenses.

In some embodiments, the optical lens 100 may satisfy the following conditional expression: 0.9<CT3/CT34<1.8. Wherein, CT3 is a thickness of the third lens L3 at the optical axis O, and CT34 is a distance between the imaging side surface S6 of the third lens L3 and the object side surface S7 of the fourth lens L4 at the optical axis O. When the optical lens 100 satisfies the above conditional expression, it can greatly compress a gap between the third lens L3 and the fourth lens L4, allowing for a compact structure of the optical lens 100 and having a good fit. Furthermore, through this design, the light can be better guided to refract at a smaller deflection angle on the surfaces of each lens, thereby reducing the sensitivity to tolerances; at the same time, it can reduce the reflection of stray light between the lenses, lowering the risk of stray light and ghost images; and it is also beneficial to reducing the difficulty of lens molding and assembly.

In some embodiments, the optical lens 100 may satisfy the following conditional expression: 1.2<CT4/ET4<1.5. Wherein, CT4 is a thickness of the fourth lens L4 at the optical axis O, and ET4 is a distance from the maximum effective aperture of the object side surface S7 of the fourth lens L4 to the maximum effective aperture of the imaging side surface S8 of the fourth lens L4 in a direction of the optical axis O. When the optical lens 100 satisfies the above conditional expression, it can reasonably control a ratio of a center thickness to an edge thickness of the fourth lens L4, thereby reasonably controlling the overall thickness of the fourth lens L4 and avoiding a large difference between the center thickness and the edge thickness, which is not conducive to processing and assembly.

In some embodiments, the optical lens 100 may satisfy the following conditional expression: 2<ET6/CT6<3. Wherein, ET6 is a distance from the maximum effective aperture of the object side surface S11 of the sixth lens L6 to the maximum effective aperture of the imaging side surface S12 of the sixth lens L6 in a direction of the optical axis O, and CT6 is a thickness of the sixth lens L6 at the optical axis O. When the optical lens 100 satisfies the above conditional expression, the sixth lens L6 has a reasonable edge thickness and a reasonable center thickness, and the surface shape variation of the sixth lens L6 is small, which can effectively control the aberration existing in the optical lens 100 and is also conducive to processing in the manufacturing process, thereby improving the production yield.

In some embodiments, the optical lens 100 may satisfy the following conditional expression: 1<(CT6+CT7)/CT67<3. Wherein, CT6 is the thickness of the sixth lens L6 at the optical axis O, CT7 is a thickness of the seventh lens L7 at the optical axis O, and CT67 is a distance from the imaging side surface S12 of the sixth lens L6 to the object side surface S13 of the seventh lens L7 along the optical axis O. When the optical lens 100 satisfies the above conditional expression, the thickness of the lenses and the distance between the lenses in a rear lens group (the rear lens group includes the fifth lens L5, the sixth lens L6 and the seventh lens L7) are reasonably configured, which can effectively shorten the total optical length, reduce the volume of the optical lens 100, and also be conducive to the processing and assembly of the lenses in the rear lens group. When exceeding the upper limit of the conditional expression, the distance between the lenses in the rear lens group is too small, the assembly of the lenses is difficult. When below the lower limit of the conditional expression, the thickness of the lenses in the rear lens group on the optical axis O is too small, thus failing to meet the production and processing requirements and failing to ensure the forming yield.

In some embodiments, the optical lens 100 may satisfy the following conditional expression: 5<F7/F<7. Wherein, F7 is an effective focal length of the seventh lens L7, and F is the effective focal length of the optical lens 100. When the optical lens 100 satisfies the above conditional expression, the positive refractive power of the seventh lens L7 will not be too strong, thus an angle between the incident light and the normal of the object side surface S13 and the imaging side surface S14 of the seventh lens L7 will not be too large, which can further suppress the occurrence of high-order aberrations. When exceeding the upper limit or the lower limit of the above conditional expression, it is not conducive to the aberration correction of the optical lens 100, thereby reducing the imaging quality.

In some embodiments, the optical lens 100 may satisfy the following conditional expression: 3<R72/R71<5. Wherein, R72 is a curvature radius of the imaging side surface S14 of the seventh lens L7 at the optical axis O, and R71 is a curvature radius of the object side surface S13 of the seventh lens L7 at the optical axis O. By constraining a ratio of the curvature radius of the object side surface S13 and the curvature radius of the imaging side surface S14 of the seventh lens L7, a difference between the curvature radius of the object side surface S13 and the curvature radius of the imaging side surface S14 of the seventh lens L7 becomes more reasonable. When the seventh lens L7 satisfies the above conditional expression, the curvature radius of the object side surface S13 of the seventh lens L7 is smaller than the curvature radius of the imaging side surface S14, and the object side surface S13 of the seventh lens L7 is more curved than the imaging side surface S14 of the seventh lens L7, so that the incident light maintains a smaller deflection angle, which is beneficial to correct the astigmatism generated by the front lens group (i.e., the first lens L1 to the sixth lens L6), and improve the imaging quality of the optical lens 100.

In some embodiments, the optical lens 100 may satisfy the following conditional expression: 120°<FOV*-F/ImgH<130°. FOV is the maximum field of view angle of the optical lens 100, F is the effective focal length of the optical lens 100, and ImgH is the radius of the maximum effective imaging circle on the image plane IMG of the optical lens 100. When the optical lens 100 satisfies the above conditional expression, it can achieve a large field of view angle while ensuring the image height of the optical lens 100, guaranteeing the image size on the image plane IMG, and so that the optical lens 100 has an appropriate imaging size, and the brightness of the image plane IMG of the optical lens 100 is enhanced. When exceeding the upper limit of the conditional expression, the image height of the optical lens 100 will be smaller, resulting in a too small imaging size, so that it is difficult to match the image plane IMG with the photosensitive chip, causing a significant drop in the relative illumination of the image plane IMG. When the brightness of the image plane IMG is relatively dim, the captured image is prone to vignetting, which reduces the imaging quality. When below the lower limit of the conditional expression, the field of view angle of the optical lens 100 is smaller, resulting in a reduced field of view captured by the optical lens 100, which is not conducive to achieving wide-angle effects.

In some embodiments, the optical lens 100 may satisfy the following conditional expression: 2<F*tan(FOV/2)/ImgH<3.2. Wherein, F represents the effective focal length of the optical lens 100, FOV is the maximum field of view angle of the optical lens 100, and ImgH is the radius of the maximum effective imaging circle on the image plane IMG of the optical lens 100. When the optical lens 100 meets the above conditional expression, it can ensure that while shortening the total optical length of the optical lens 100, it is also beneficial for correcting the aberration of the optical lens 100, which helps to obtain an optical lens 100 that is both miniaturized and has good imaging quality; at the same time, it can also enable the optical lens 100 to have the characteristics of a large field of view angle and a large image plane, thereby being able to obtain more scene content and enrich the imaging information of the optical lens 100. When exceeding the upper limit of the above conditional expression, the field of view angle of the optical lens 100 is too small, thereby reducing the field of view range of the optical lens 100, resulting in incomplete imaging information of the optical lens 100 and affecting the shooting quality of the optical lens 100, or the focal length of the optical lens 100 is too long and it is difficult to compress the total optical length of the optical lens 100, thereby resulting in an increase in the volume of the optical lens 100 and being unfavorable for the optical lens 100 to meet the miniaturization design requirements. When below the lower limit of the above conditional expression, the field of view angle of the optical lens 100 is too large, which causes excessive distortion in the outer field of view, thereby resulting in distortion in the peripheral area of the image and reducing the imaging performance of the optical lens 100.

In some embodiments, the optical lens 100 may satisfy the following conditional expression: **85°<FOV/FNO<95°**. Wherein, FOV is the maximum field of view angle of the optical lens 100, and FNO is the aperture number of the optical lens 100. When the optical lens 100 satisfies the above conditional expression, it can reasonably control the field of view angle and the amount of light passing through the optical lens 100, improve the distortion in the peripheral field of view and prevent excessive light flux of the optical lens 100. If exceeding the upper limit of the above conditional expression, the field of view angle of the optical lens 100 is too large, causing excessive distortion in the peripheral field of view, and the periphery of the image will show a distorted phenomenon, additionally, it will also lead to a too small aperture number, resulting in excessive light flux of the optical lens 100, causing non-effective light to also reach the image plane IMG, leading to aberrations such as spherical aberration and field curvature in the imaging (especially in the peripheral field of view), thereby reducing the imaging performance of the optical lens 100. If below the lower limit of the above conditional expression, the aperture number of the optical lens 100 is relatively large, resulting in insufficient light flux of the optical lens 100, so that the clarity of the captured image will decrease.

In some embodiments, the optical lens 100 may satisfy the following conditional expression: 1.6<FNO<1.7. FNO is the aperture number of the optical lens 100. When the optical lens 100 satisfies the above conditional expression, it has the characteristic of a large aperture, and the optical lens 100 has sufficient light intake, which can allow the images captured by the optical lens 100 to be clearer, and thus can be applied to shooting high-quality night scenes, starry skies and other low-brightness object space scenes. In addition, it can also avoid introducing excessive aberrations, thereby allowing the optical lens 100 to achieve overall balance.

In some embodiments, the optical lens 100 may satisfy the following conditional expression: -8<F1/CT1<-6. Wherein, F1 is the effective focal length of the first lens L1, and CT1 is a thickness of the first lens L1 at the optical axis O. Since the first lens L1 is closest to the object side, setting the first lens L1 as a negative refractive lens can allow the incident light entering the optical lens 100 at a large angle to enter smoothly, thereby expanding the field of view angle range of the optical lens 100 and ensuring the imaging quality of the optical lens 100.

In some embodiments, the optical lens 100 may satisfy the following conditional expression: 5<F3/CT3<15. Wherein, F3 is an effective focal length of the third lens L3, and CT3 is the thickness of the third lens L3 at the optical axis O. Since both the first lens L1 and the second lens L2 have negative refractive power, a third lens L3 with positive refractive power is beneficial for correcting edge aberrations and improving the imaging resolution of the optical lens 100. Limiting a ratio of the focal length of the third lens L3 to the thickness of the third lens L3 within a certain range is beneficial for reducing the thickness tolerance sensitivity of the third lens L3, lowering the processing difficulty of the third lens L3, increasing the assembly qualification rate of the optical lens 100, and further reducing production costs. When the above conditional expression is satisfied, the thickness of the third lens L3 is appropriate, which is beneficial for reducing the thickness tolerance sensitivity of the third lens L3, lowering the processing difficulty of the third lens L3, increasing the assembly qualification rate of the optical lens 100, and further reducing production costs. When exceeding the upper limit of the above conditional expression, the optical lens 100, while meeting the optical performance requirements, has an excessively thin third lens L3, which is not conducive to the processing of the third lens L3 and the third lens L3 has a high thickness tolerance sensitivity. When below the lower limit of the above conditional expression, the optical lens 100, while meeting the optical performance requirements, has an overly thick third lens L3, which is not conducive to the miniaturization and lightweight design requirements of the optical lens 100.

In some embodiments, the optical lens 100 may satisfy the following conditional expression: 3<F4/CT4<6. Wherein, F4 is an effective focal length of the fourth lens L4, and CT4 is the thickness of the fourth lens L4 at the optical axis O. When the optical lens 100 satisfies the above conditional expression, it can reasonably configure the fourth lens L4, effectively control the deflection angle of the light in the optical lens 100, thereby reducing the sensitivity of the optical lens 100 and improving the resolution. When exceeding the upper limit of the above conditional expression, the thickness of the fourth lens L4 is too thin, resulting in an overly small deflection angle of the marginal light, which is not conducive to correcting the aberration of the optical lens 100 and thus not beneficial for enhancing the imaging quality of the optical lens 100. When below the lower limit of the above conditional expression, the focal length of the fourth lens L4 is too small, thereby providing an excessive positive refractive power for the optical lens 100, and leading to an overly large deflection angle of the light in the optical lens 100.

In some embodiments, the optical lens 100 may satisfy the following conditional expression: 10<F5/CT5<30. Wherein, F5 is an effective focal length of the fifth lens L5, and CT5 is an thickness of the fifth lens L5 at the optical axis O. When the optical lens 100 satisfies the above conditional expression, it can reasonably configure a ratio of the effective focal length and the center thickness of the fifth lens L5, so that the center thickness of the fifth lens L5 is neither too thin nor too thick, which helps to reduce the tolerance sensitivity of the fifth lens L5 and enables the fifth lens L5 to effectively correct the aberrations caused by the deflection of light rays from the lenses located on an object side of the fifth lens L5, thereby enhancing the imaging resolution of the optical lens 100. When below the lower limit of the above conditional expression, the refractive power of the fifth lens L5 is too strong, which is not conducive to correcting the aberrations of the optical lens 100, and the central thickness of the fifth lens L5 is too large, which is not conducive to reducing the sensitivity of the optical lens 100. When exceeding the upper limit of the above conditional expression, the refractive power of the fifth lens L5 is too strong, which is also not conducive to correcting the aberrations of the optical lens 100, and the central thickness of the fifth lens L5 is too small, which is not conducive to reducing the sensitivity of the optical lens 100.

In some embodiments, the optical lens 100 may satisfy the following conditional expression: -30<F6/CT6<-20. Wherein, F6 is an effective focal length of the sixth lens L6, and CT6 is the thickness of the sixth lens L6 at the optical axis O. When the optical lens 100 satisfies the above conditional expression, on the one hand, it can avoid the excessive effective focal length of the sixth lens L6, which would otherwise cause difficult-to-correct astigmatism, thereby improving the imaging quality of the optical lens 100; on the other hand, it can also better control the central thickness of the sixth lens L6 within a reasonable range, which is beneficial for the lightweight design of the optical lens 100 and also facilitates the molding and processing of the sixth lens L6.

In some embodiments, the optical lens 100 may satisfy the following conditional expression: 5<F7/CT7<15. F7 is an effective focal length of the seventh lens L7, and CT7 is the thickness of the seventh lens L7 at the optical axis O. When the optical lens 100 satisfies the above conditional expression, it can reduce the tolerance sensitivity of the central thickness of the seventh lens L7, lower the processing difficulty of the seventh lens L7, improve the assembly yield of the optical lens 100, further reduce production costs, and by satisfying the above conditional expression, it can avoid the excessive effective focal length of the seventh lens L7 and the difficult-to-correct astigmatism of the optical lens 100, thereby improving the imaging quality of the optical lens 100. At the same time, it can avoid the excessive central thickness of the seventh lens L7, which is beneficial for the miniaturization design of the optical lens 100. When exceeding the upper limit or below the lower limit of the above conditional expression, the tolerance sensitivity of the central thickness of the seventh lens L7 is high, thereby increasing the processing difficulty of the seventh lens L7, which is not conducive to improving the assembly yield of the optical lens 100 and further increases production costs.

In some embodiments, the optical lens 100 may satisfy the following conditional expression: $-2 < F1/F < -1.5$. F1 is the effective focal length of the first lens L1, and F is the effective focal length of the optical lens 100. When the optical lens 100 satisfies the above conditional expression, it can reasonably configure a ratio of the focal length of the first lens L1 to the focal length of the optical lens 100. For the entire optical lens 100, the refractive power of the first lens L1 will not be too strong, thereby avoiding the introduction of excessive spherical aberration, so that the optical lens 100 has good imaging quality.

In some embodiments, the optical lens 100 may satisfy the following conditional expression: $-15 < F2/F < -5$. F2 is the effective focal length of the second lens L2, and F is the effective focal length of the optical lens 100. When the optical lens 100 satisfies the above conditional expression, it is beneficial to reduce the deflection angle of light in the second lens L2, and at the same time, the negative refractive power provided by the second lens L2 can effectively balance the spherical aberration of the optical lens 100, effectively correct aberrations, thereby achieving good imaging quality. It is also beneficial to reasonably configure the center thickness of the second lens L2, thereby shortening the total length of the optical lens 100, and also beneficial to expand the field of view angle of the optical lens 100.

In some embodiments, the optical lens 100 may satisfy the following conditional expression: $4 < F3/F < 7$. F3 is the effective focal length of the third lens L3, and F is the effective focal length of the optical lens 100. By limiting a relationship between the effective focal length of the third lens L3 and the effective focal length of the optical lens 100, the edge field aberration of the optical lens 100 can be corrected, the imaging resolution of the optical lens 100 can be improved, and thus the imaging quality of the optical lens 100 can be enhanced. When exceeding the upper limit of the above conditional expression, it will affect the ability of the optical lens 100 to correct chromatic aberration and aberration, thereby affecting the imaging quality of the optical lens 100. When below the lower limit of the conditional expression, the effective focal length of the optical lens 100 will be too large, resulting in a smaller field of view angle of the optical lens 100, and unable to achieve the characteristics of a large aperture and a wide angle.

In some embodiments, the optical lens 100 may satisfy the following conditional expression: $2 < F4/F < 5$. F4 is the effective focal length of the fourth lens L4, and F is the effective focal length of the optical lens 100. When the optical lens 100 satisfies the above conditional expression, the fourth lens L4 provides a part of the positive refractive power for the optical lens 100, which can be used to adjust the overall refractive power of the optical lens 100. The fourth lens L4, together with the first lens L1, the second lens L2 and the third lens L3, forms a quasi-Gaussian structure, which can balance the distortion produced by the first lens L1, the second lens L2 and the third lens L3, and avoid the excessive refractive index causing high-order aberration, thereby improving the imaging quality of the optical lens 100. When below the lower limit of the above conditional expression, the effective focal length of the optical lens 100 is too small, which is not conducive to meeting the long focal telephoto characteristics. When exceeding the upper limit of the above conditional expression, the focal length of the fourth lens L4 is too large, so that it is difficult to balance the distortion produced by the first lens L1, the second lens L2 and the third lens L3. The refractive index of the optical lens 100 is too large, which is prone to causing high-order aberration.

In some embodiments, the optical lens 100 may satisfy the following conditional expression: $5 < F5/F < 20$. F5 is the effective focal length of the fifth lens L5, and F is the effective focal length of the optical lens 100. When the optical lens 100 satisfies the above conditional expression, it can reduce the exit angle of the light after passing through the lens group, thereby reducing the incident angle of the light entering the photosensitive chip located on the image side of the optical lens 100, and further improving the photosensitive performance of the photosensitive chip. When exceeding the upper limit of the above conditional expression, the refractive power of the fifth lens L5 is too strong, which is prone to causing large edge aberration and chromatic aberration, and is not conducive to improving the resolution performance of the optical lens 100. When below the lower limit of the above conditional expression, the refractive power of the fifth lens L5 is insufficient to reduce the exit angle of the light, which is not conducive to improving the photosensitive performance of the photosensitive chip.

In some embodiments, the optical lens 10 may satisfy the following conditional expression: $-5 < F6/F < -2$. Wherein, F6 is the effective focal length of the sixth lens L6, and F is the effective focal length of the optical lens 100. By limiting a relationship between the effective focal length of the sixth lens L6 and the effective focal length of the optical lens 100 as described above, it helps to correct the aberration of the optical lens 100, and at the same time, it can reduce the temperature sensitivity of the optical lens 100, thereby improving the imaging quality of the optical lens 100. When exceeding the upper limit of the above conditional expression, the refractive power of the sixth lens L6 is too strong, and the ratio of the effective focal length of the sixth lens L6 to the total effective focal length of the optical lens 100 is too large, which is not conducive to the aberration correction of the optical lens 100 and may reduce the imaging quality of the optical lens 100. When below the lower limit of the above conditional expression, the refractive power of the sixth lens L6 is too weak, and the ratio of the effective focal length of the sixth lens L6 to the total effective focal length of the optical lens 100 is too small, thereby increasing the assembly sensitivity.

In some embodiments, the optical lens 100 may satisfy the following conditional expression: 4<R11/R12<6. Wherein, R11 is a radius of curvature of the object side surface S1 of the first lens L1 at the optical axis O, and R12 is a radius of curvature of the imaging side surface S2 of the first lens L1 at the optical axis O. When the optical lens 100 satisfies the above conditional expression, it is beneficial to control the shape and curvature of the first lens L1, thereby effectively reducing the aberration introduction value of the incident light, promoting the aberration balance of the optical lens 100, and at the same time, it can reduce the processing difficulty of the first lens L1, which is conducive to the manufacturing of the first lens L1 and improves the processing technology of the optical lens 100.

In some embodiments, the optical lens 100 may satisfy the following conditional expression: 0.5<R21/R22<0.7. Wherein, R21 is a radius of curvature of the imaging side surface S4 of the second lens L2 at the optical axis O, and R22 is a radius of curvature of the object side surface S3 of the second lens L2 at the optical axis O. When the optical lens 100 satisfies the above conditional expression, by adjusting the radius of curvature of the second lens L2, it can effectively correct the spherical aberration and astigmatism of the optical lens 100, and at the same time, it can reduce the sensitivity of the second lens L2, reduce the influence of field curvature of the optical lens 100 during focusing at different object distances, and improve the imaging quality.

In some embodiments, the optical lens 100 may satisfy the following conditional expression: 0.04<R31/R32<0.5. Wherein, R31 is a radius of curvature of the imaging side surface S6 of the third lens L3 at the optical axis O, and R32 is a radius of curvature of the object side surface S5 of the third lens L3 at the optical axis O. When the optical lens 100 satisfies the above conditional expression, in combination with the concave-convex surface shape of the third lens L3, it can optimize the curvature radius and the surface shape of the object side surface S5 and imaging side surface S6 of the third lens L3, which is conducive to the reasonable coordination of the negative refractive power of the first lens L1 and the negative refractive power of the second lens L2 with the third lens L3, thereby reducing the spherical aberration on the optical axis of the entire optical lens 100, at the same time, which is beneficial for correcting the optical path from the third lens L3 to the fourth lens L4, thereby reducing the generation of optical distortion.

In some embodiments, the optical lens 100 may satisfy the following conditional expression: -0.5<R41/R42<-0.2. Wherein, R41 is a radius of curvature at the imaging side surface S8 of the fourth lens L4 at the optical axis O, and R42 is a radius of curvature at the object side surface S7 of the fourth lens L4 at the optical axis O. When the optical lens 100 satisfies the above conditional expression, it is conducive to correcting the aberration produced by the optical lens 100, allowing the refractive power distribution of each lens of the optical lens 100 to be uniform in a direction perpendicular to the optical axis O, significantly correcting the distortion and aberration produced by the front lens, and at the same time avoiding excessive bending of the fourth lens L4, which is easy to form and manufacture.

In some embodiments, the optical lens 100 may satisfy the following conditional expression: -1.5<R51/R52<-0.5. Wherein, R51 is a radius of curvature at the imaging side surface S10 of the fifth lens L5 at the optical axis O, and R52 is a radius of curvature at the object side surface S9 of the fifth lens L5 at the optical axis O. When the optical lens 100 satisfies the above conditional expression, the shape of the fifth lens L5 can be reasonably controlled, effectively controlling the astigmatism contribution of the fifth lens L5, ensuring the imaging quality of the intermediate field of view, which is beneficial for correcting the aberration of the optical lens 100 and ensuring the balance of the distortion of the optical lens 100. At the same time, it avoids the object side surface S9 and imaging side surface S10 of the fifth lens L5 being overly curved at the optical axis O, which is beneficial for reducing the processing difficulty of the fifth lens L5 and improving the yield rate of the fifth lens L5.

In some embodiments, the optical lens 100 may satisfy the following conditional expression: 0>R61/R62>-0.6. Wherein, R61 is a radius of curvature at the imaging side surface S12 of the sixth lens L6 at the optical axis O, and R62 is a radius of curvature at the object side surface S11 of the sixth lens L6 at the optical axis O. When the optical lens 100 satisfies the above conditional expression, the radius of curvature at the object side surface S11 and the imaging side surface S12 of the sixth lens L6 at the optical axis O can be appropriately configured, so that the shape of the sixth lens L6 is not overly curved. Thus, it can also reduce the sensitivity of the performance change of the optical lens 100 while correcting the astigmatic aberration of the optical lens 100, which is beneficial for improving the product yield rate.

The surface shape of each aspherical lens can be defined by, but not limited to, the following aspherical formula:

$$Z = \frac{cr^2}{1 + \sqrt{1 - (k+1)c^2r^2}} + \sum Air^i$$

Wherein, Z is a distance from the corresponding point on the aspheric surface to the plane tangent to the surface vertex, r is the distance from the corresponding point on the aspheric surface to the optical axis, c is a curvature of the vertex of the aspheric surface, and c=1/Y, Y is the radius of curvature (that is, the curvature of the vertex of the aspheric surface c is the reciprocal of the Y radius in the Table 1); k is the cone coefficient; Ai is the coefficient corresponding to the i-th higher-order term of the aspheric surface.

The optical lens 100 of the present disclosure will be described in detail below with reference to specific parameters.

First embodiment

FIG. 1 is a schematic structural diagram of the optical lens 100 of the first embodiment, the optical lens 100 sequentially includes a first lens L1, a second lens L2, a third lens L3, an aperture STO, a fourth lens L4, a fifth lens L5, a sixth lens L6, a seventh lens L7, a filter IR, and a protective glass CG along an optical axis O from an object side to an imaging side.

Further, the first lens L1 has negative refractive power, the second lens L2 has negative refractive power, third lens L3 has positive refractive power, the fourth lens L4 has positive refractive power, the fifth lens L5 has positive refractive power, the sixth lens L6 has negative refractive power, and the seventh lens L7 has positive refractive power.

Furthermore, an object side surface S1 of the first lens L1 is convex near the optical axis O, an imaging side surface S2 of the first lens L1 is concave near the optical axis O, an object side surface S3 of the second lens L2 is concave near the optical axis O, an imaging side surface S4 of the second lens L2 is convex near the optical axis O, an object side surface S5 of the third lens L3 is convex near the optical axis O, an imaging side surface S6 of the third lens L3 is concave near the optical axis O, an object side surface S7 of the fourth lens L4 is convex near the optical axis O, an imaging side surface S8 of the fourth lens L4 is convex near the optical axis O, an object side surface S9 of the fifth lens L5 is convex near the optical axis O, an imaging side surface S10 of the fifth lens L5 is convex near the optical axis O, an object side surface S11 of the sixth lens L6 is concave near the optical axis O, an imaging side surface S12 of the sixth lens L6 is concave near the optical axis O, an object side surface S13 of the seventh lens L7 is convex near the optical axis O, an imaging side surface S14 of the seventh lens L7 is concave near the optical axis O.

The elements from the object surface to the imaging surface along the optical axis O of the optical lens 100 are arranged in sequence according to the order of the elements from top to bottom in Table 1a. In the same lens, a surface with a smaller surface number is the object side surface, a surface with a larger surface number is the imaging side surface, for example, the surface number S1 and the surface number S2 are the object side surface S1 and the imaging side surface S2 of the first lens L1. The Y radius in Table 1a is the curvature radius of the object side surface or the imaging side surface of the corresponding surface number at the optical axis O. The first value in the "Thickness" parameter column of a lens is the thickness of the lens at the optical axis O, and the second value is a distance from the imaging side surface of the lens to a rear surface in an imaging side direction on the optical axis O. The value of the aperture STO in the "Thickness" parameter column is a distance from the aperture STO to a vertex of a latter surface in an imaging side direction (the vertex refers to an intersection point of the latter surface and the optical axis O) on the optical axis O, and by default, a direction from the object side surface of the first lens L1 to the imaging side surface of the last lens is a positive direction of the optical axis O. When the value of the aperture STO in the "Thickness" parameter column is negative, it means that the aperture STO is arranged on the imaging side of the vertex of the latter surface. When the value of the aperture STO in the "Thickness" parameter column is a positive value, the aperture STO is arranged on the object side of the vertex of the latter surface. It can be understood that the units of the Y radius, the thickness, and the effective focal length in Table 1a are all mm, the reference wavelength for the refractive index and Abbe number of each lens in Table 1a is 587.56 nm, and the reference wavelength for the effective focal length of each lens in Table 1a is 546 nm.

In the first embodiment, the object side surface S13 and the imaging side surface S14 of the seventh lens L7 are both aspherical. Table 1b shows the cone coefficient and the higher-order term coefficients A4, A6, A8, A10, A12, A14 and A16 that can be used for each aspherical lens in the first embodiment.

Table 1a

| First embodiment | | | | | | | | |
|---|---|---|---|---|---|---|---|---|
| F=4.0546mm, FNO=1.63, FOV=140° | | | | | | | | |
| Surface number | Name | Surface type | Y radius | Thickness | Material | Refractive index | Abbe number | Effective focal length |
| | Object side | sphere | infinity | 5000 | | | | |

(continued)

| Surface number | Name | Surface type | Y radius | Thickness | Material | Refractive index | Abbe number | Effective focal length |
|---|---|---|---|---|---|---|---|---|
| First embodiment | | | | | | | | |
| F=4.0546mm, FNO=1.63, FOV=140° | | | | | | | | |
| 1 | First lens | sphere | 22.639 | 1.00 | glass | 1.755 | 52.337 | -7.087 |
| 2 | | sphere | 4.2608 | 4.27 | | | | |
| 3 | Second lens | sphere | -8.233 | 4.84 | glass | 1.773 | 49.614 | -45.998 |
| 4 | | sphere | -13.449 | 0.30 | | | | |
| 5 | Third lens | sphere | 12.9353 | 2.25 | glass | 1.883 | 39.225 | 25.532 |
| 6 | | sphere | 27.638 | 3.08 | | | | |
| 7 | Aperture | sphere | infinity | -0.61 | | | | |
| 8 | Fourth lens | sphere | 8.692 | 3.29 | glass | 1.618 | 63.396 | 11.289 |
| 9 | | sphere | -30.808 | 0.10 | | | | |
| 10 | Fifth lens | sphere | 7.893 | 2.65 | glass | 1.497 | 81.560 | 70.355 |
| 11 | Sixth lens | sphere | -8.6043 | 0.60 | glass | 1.847 | 23.787 | -12.963 |
| 12 | | sphere | 24.2652 | 1.64 | | | | |
| 13 | Seventh lens | asphere | 10.577 | 1.82 | glass | 1.619 | 63.855 | 21.414 |
| 14 | | asphere | 48.2474 | 1.30 | | | | |
| 15 | Filter | sphere | infinity | 0.40 | glass | 1.523 | 54.500 | |
| 16 | | sphere | infinity | 2.25 | | | | |
| 17 | Protective glass | sphere | infinity | 0.50 | glass | 1.523 | 54.500 | |
| 18 | | sphere | infinity | 0.30 | | | | |
| 19 | Image surface | sphere | infinity | 0.00 | | | | |

Table 1b

| First embodiment | | |
|---|---|---|
| Aspheric coefficient | | |
| Surface number | 13 | 14 |
| K | -4.0065E+00 | 0.0000E+00 |
| A4 | -1.8863E-03 | -1.1142E-03 |
| A6 | -4.3263E-05 | -6.3708E-05 |
| A8 | -9.1902E-07 | 2.7942E-06 |
| A10 | -3.1659E-07 | -1.1622E-07 |
| A12 | 2.7144E-08 | 2.1538E-09 |
| A14 | 7.7703E-10 | 8.3859E-10 |
| A16 | -6.8011E-11 | -3.5882E-11 |

Referring to (A) of FIG. 2, (A) of FIG. 2 shows a longitudinal spherical aberration diagram of the optical lens 100 in the first embodiment at wavelengths of 656 nm, 588 nm, 546 nm, 486 nm, 436 nm, and 410 nm. Wherein, the abscissa along the X-axis direction represents the deviation of the focus point in mm, and the ordinate along the Y-axis direction represents the normalized field of view. It can be seen from (A) in Figure 2 that the spherical aberration value of the optical lens 100 in the first embodiment is well, indicating that the imaging quality of the optical lens 100 in this embodiment is well.

Referring to (B) of FIG. 2, (B) of FIG. 2 is an astigmatism curve diagram of the optical lens 100 in the first embodiment at a wavelength of 546 nm. Wherein, the abscissa along the X-axis direction represents the deviation of the focus point in mm, and ordinate along the Y-axis direction represents the field of view angle in deg. T in the astigmatism curve diagram represents the curvature of the image plane IMG in the tangential direction, and S represents the curvature of the image plane IMG in the sagittal direction. It can be seen from (B) of FIG. 2 that at this wavelength, astigmatism of the optical lens 100 is well compensated.

Referring to (C) of FIG. 2, (C) of FIG. 2 is a distortion diagram of the optical lens 100 in the first embodiment at a wavelength of 546 nm. Wherein, the abscissa along the X-axis direction represents the distortion in %, and the ordinate along the Y-axis direction represents the field of view in deg. It can be seen from (C) of FIG. 2 that this wavelength, the distortion of the optical lens 100 is well corrected.

Second embodiment

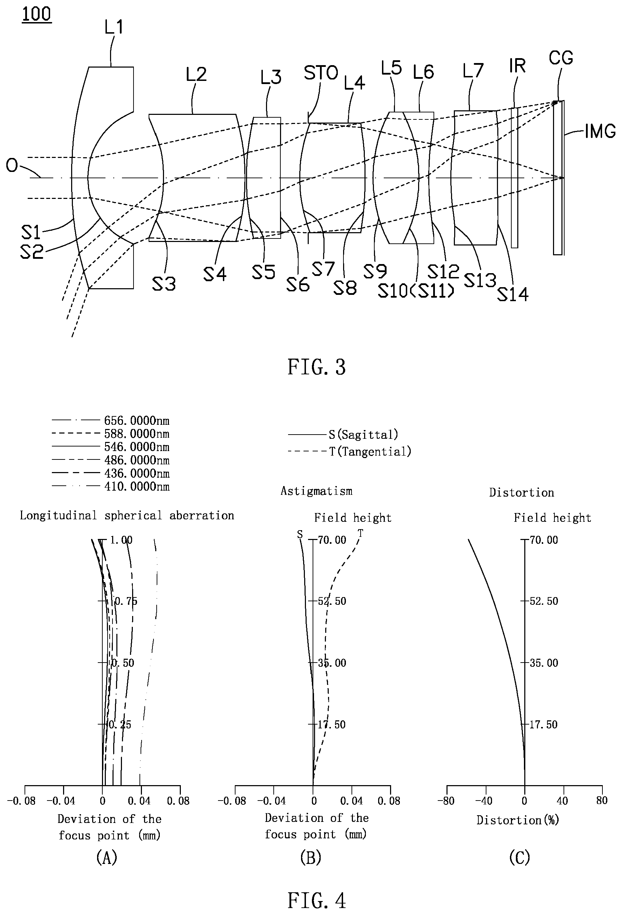

FIG. 3 is a schematic structural diagram of the optical lens 100 of the second embodiment. The optical lens 100 sequentially includes a first lens L1, a second lens L2, a third lens L3, an aperture STO, a fourth lens L4, a fifth lens L5, a sixth lens L6, a seventh lens L7, a filter IR, and a protective glass CG along an optical axis O from an object side to an imaging side.

Further, the refractive power of each lens in the second embodiment is consistent with the refractive power of each lens in the in the first embodiment, and a surface shape of each lens in the second embodiment is consistent with a surface shape of each lens in the first embodiment.

Other parameters of the second embodiment are given in Table 2a, and the definition of each parameter can be obtained from the description of the foregoing embodiment and will not be described again here. It can be understood that the units of Y radius, thickness, and effective focal length in Table 2a are all mm, the reference wavelength for the refractive index and Abbe number of each lens in Table 2a is 587.56 nm, and the reference wavelength for the effective focal length of each lens in Table 2a is 546 nm.

In the second embodiment, the object side surface S13 and the imaging side surface S14 of the seventh lens L7 are both aspherical. Table 2b shows the cone coefficient and the higher-order term coefficients A4, A6, A8, A10, A12, A14 and A16 that can be used for each aspherical lens in the second embodiment.

Table 2a

| Second embodiment | | | | | | | | |
|---|---|---|---|---|---|---|---|---|
| F=4.0406mm, FNO=1.64, FOV=140° | | | | | | | | |
| Surface number | Name | Surface type | Y radius | Thickness | Material | Refractive index | Abbe number | Effective focal length |
| | Object side | sphere | infinity | 5000 | | | | |
| 1 | First lens | sphere | 21.566 | 1.00 | glass | 1.754998 | 52.337 | -7.161 |
| 2 | | sphere | 4.2518 | 4.61 | | | | |
| 3 | Second lens | sphere | -7.846 | 4.97 | glass | 1.772501 | 49.614 | -39.923 |
| 4 | | sphere | -13.412 | 0.09 | | | | |
| 5 | Third lens | sphere | 16.0490 | 2.06 | glass | 1.883001 | 39.225 | 19.357 |
| 6 | | sphere | 226.040 | 1.70 | | | | |
| 7 | Aperture | sphere | infinity | -0.52 | | | | |
| 8 | Fourth lens | sphere | 9.372 | 3.97 | glass | 1.437001 | 95.100 | 15.191 |
| 9 | | sphere | -19.992 | 0.47 | | | | |
| 10 | Fifth lens | sphere | 8.386 | 2.81 | glass | 1.617998 | 63.406 | 37.425 |
| 11 | Sixth lens | sphere | -8.3862 | 0.60 | glass | 1.846666 | 23.787 | -13.921 |
| 12 | | sphere | 19.6806 | 1.35 | | | | |

(continued)

| Second embodiment | | | | | | | | |
|---|---|---|---|---|---|---|---|---|
| F=4.0406mm, FNO=1.64, FOV=140° | | | | | | | | |
| Surface number | Name | Surface type | Y radius | Thickness | Material | Refractive index | Abbe number | Effective focal length |
| 13 | Seventh lens | asphere | 11.740 | 2.83 | glass | 1.61638 | 63.590 | 23.267 |
| 14 | | asphere | 57.7851 | 0.84 | | | | |
| 15 | Filter | sphere | infinity | 0.40 | glass | 1.523 | 54.500 | |
| 16 | | sphere | infinity | 2.20 | | | | |
| 17 | Protective | sphere | infinity | 0.50 | glass | 1.523 | 54.500 | |
| 18 | glass | sphere | infinity | 0.10 | | | | |
| 19 | Image surface | sphere | infinity | 0.00 | | | | |

Table 2b

| Second embodiment | | |
|---|---|---|
| Aspheric coefficient | | |
| Surface number | 13 | 14 |
| K | -1.0135E+01 | 0.0000E+00 |
| A4 | -9.8755E-04 | -5.6826E-04 |
| A6 | -4.8881E-06 | -7.2664E-05 |
| A8 | -6.7639E-06 | 1.2609E-05 |
| A10 | 7.7504E-07 | -1.5222E-06 |
| A12 | -5.9745E-08 | 1.0856E-07 |
| A14 | 3.0859E-09 | -3.8791E-09 |
| A16 | -6.9745E-11 | 5.4349E-11 |

Referring to FIG. 4, it can be seen from (A) a longitudinal spherical aberration diagram, (B) an astigmatism curve diagram, and (C) a distortion diagram in FIG. 4 that, the spherical aberration value, astigmatism, and distortion of the optical lens 100 of the second embodiment are well controlled, so that the optical lens 100 of this embodiment has a good imaging quality. In addition, regarding the wavelengths corresponding to the curves in (A) in Figure 4, (B) in Figure 4, and (C) in Figure 4, please refer to the contents described in (A) in Figure 2, (B) in Figure 2, and (C) in Figure 2 in the first embodiment and will not be described again here.

Third embodiment

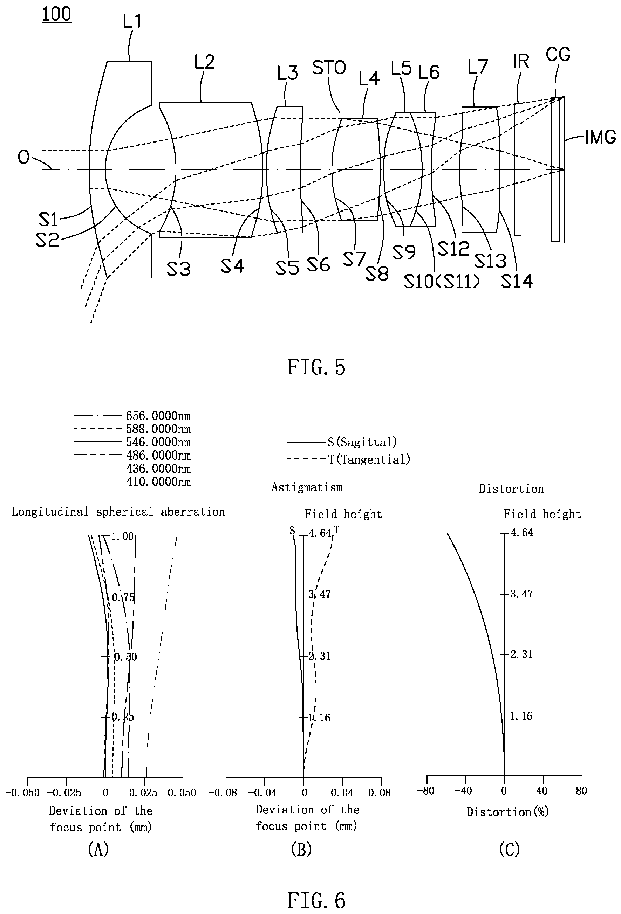

FIG. 5 is a schematic structural diagram of the optical lens 100 of the third embodiment. The optical lens 100 sequentially includes a first lens L1, a second lens L2, a third lens L3, an aperture STO, a fourth lens L4, a fifth lens L5, a sixth lens L6, a seventh lens L7, a filter IR, and a protective glass CG along an optical axis O from an object side to an imaging side.

Further, the refractive power of each lens in the third embodiment is consistent with the refractive power of each lens in the in the first embodiment, and a surface shape of each lens in the third embodiment is consistent with a surface shape of each lens in the first embodiment.

Other parameters of the third embodiment are given in Table 3a, and the definition of each parameter can be obtained from the description of the foregoing embodiment and will not be described again here. It can be understood that the units of Y radius, thickness, and effective focal length in Table 3a are all mm, the reference wavelength for the refractive index and Abbe number of each lens in Table 3a is 587.56 nm, and the reference wavelength for the effective focal length of each lens in Table 3a is 546 nm.

In the third embodiment, the object side surface S13 and the imaging side surface S14 of the seventh lens L7 are both aspherical. Table 3b shows the cone coefficient and the higher-order term coefficients A4, A6, A8, A10, A12, A14 and A16 that can be used for each aspherical lens in the third embodiment.

Table 3a

| Third embodiment | | | | | | | | |
|---|---|---|---|---|---|---|---|---|
| F=4.0459mm, FNO=1.64, FOV=140.13° | | | | | | | | |
| Surface number | Name | Surface type | Y radius | Thickness | Material | Refractive index | Abbe number | Effective focal length |
| | Object side | sphere | infinity | 5000 | | | | |
| 1 | First lens | sphere | 21.614 | 1.00 | glass | 1.755 | 52.34 | -7.312 |
| 2 | | sphere | 4.3251 | 4.46 | | | | |
| 3 | Second lens | sphere | -7.989 | 5.50 | glass | 1.773 | 49.61 | -53.255 |
| 4 | | sphere | -12.883 | 0.22 | | | | |
| 5 | Third lens | sphere | 12.4514 | 2.15 | glass | 1.883 | 39.23 | 18.512 |
| 6 | | sphere | 47.106 | 2.48 | | | | |
| 7 | Aperture | sphere | infinity | -0.51 | | | | |
| 8 | Fourth lens | sphere | 8.983 | 3.05 | glass | 1.437 | 1.95 | 15.940 |
| 9 | | sphere | -28.129 | 0.22 | | | | |
| 10 | Fifth lens | sphere | 8.815 | 2.44 | glass | 1.618 | 63.41 | 39.838 |
| 11 | Sixth lens | sphere | -8.8145 | 0.60 | glass | 1.847 | 23.79 | -14.680 |
| 12 | | sphere | 20.7873 | 1.77 | | | | |
| 13 | Seventh lens | asphere | 11.557 | 2.49 | glass | 1.586 | 60.89 | 24.563 |
| 14 | | asphere | 52.9829 | 0.99 | | | | |
| 15 | Filter | sphere | infinity | 0.40 | glass | 1.523 | 54.500 | |
| 16 | | sphere | infinity | 1.92 | | | | |
| 17 | Protective glass | sphere | infinity | 0.50 | glass | 1.523 | 54.500 | |
| 18 | | sphere | infinity | 0.30 | | | | |
| 19 | Image surface | sphere | infinity | 0.00 | | | | |

Table 3b

| Third embodiment | | |
|---|---|---|
| Aspheric coefficient | | |
| Surface number | 13 | 14 |
| K | -1.0404E+01 | 0.0000E+00 |
| A4 | -1.3163E-03 | -1.0091E-03 |
| A6 | -2.0245E-05 | -7.0886E-05 |
| A8 | -8.4797E-06 | 8.6765E-06 |
| A10 | 9.9587E-07 | -9.7624E-07 |
| A12 | -7.0608E-08 | 7.3880E-08 |

(continued)

| Third embodiment | | |
|---|---|---|
| Aspheric coefficient | | |
| Surface number | 13 | 14 |
| A14 | 2.7643E-09 | -2.9059E-09 |
| A16 | -3.0201E-11 | 4.8915E-11 |

Referring to FIG. 6, it can be seen from (A) a longitudinal spherical aberration diagram, (B) an astigmatism curve diagram, and (C) a distortion diagram in FIG. 6 that, the spherical aberration value, astigmatism, and distortion of the optical lens 100 of the third embodiment are well controlled, so that the optical lens 100 of this embodiment has a good imaging quality. In addition, regarding the wavelengths corresponding to the curves in (A) in Figure 6, (B) in Figure 6, and (C) in Figure 6, please refer to the contents described in (A) in Figure 2, (B) in Figure 2, and (C) in Figure 2 in the first embodiment and will not be described again here.

Fourth embodiment

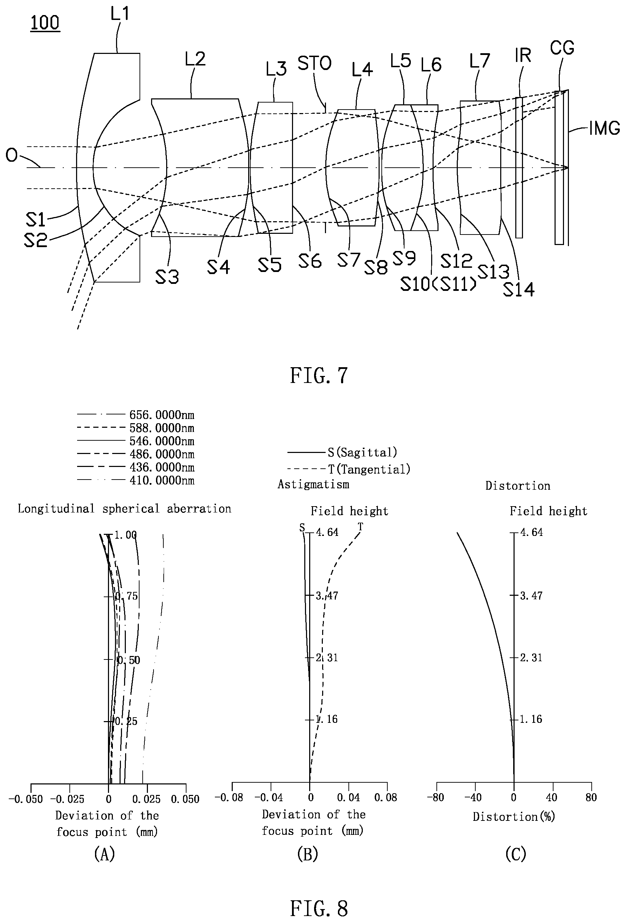

FIG. 7 is a schematic structural diagram of the optical lens 100 of the fourth embodiment. The optical lens 100 sequentially includes a first lens L1, a second lens L2, a third lens L3, an aperture STO, a fourth lens L4, a fifth lens L5, a sixth lens L6, a seventh lens L7, a filter IR, and a protective glass CG along an optical axis O from an object side to an imaging side.
Further, the refractive power of each lens in the fourth embodiment is consistent with the refractive power of each lens in the in the first embodiment, and a surface shape of each lens in the fourth embodiment is consistent with a surface shape of each lens in the first embodiment.
Other parameters of the fourth embodiment are given in Table 4a, and the definition of each parameter can be obtained from the description of the foregoing embodiment and will not be described again here. It can be understood that the units of Y radius, thickness, and effective focal length in Table 4a are all mm, the reference wavelength for the refractive index and Abbe number of each lens in Table 4a is 587.56 nm, and the reference wavelength for the effective focal length of each lens in Table 4a is 546 nm.
In the fourth embodiment, the object side surface S13 and the imaging side surface S14 of the seventh lens L7 are both aspherical. Table 4b shows the cone coefficient and the higher-order term coefficients A4, A6, A8, A10, A12, A14 and A16 that can be used for each aspherical lens in the fourth embodiment.

Table 4a

| Fourth embodiment | | | | | | | | |
|---|---|---|---|---|---|---|---|---|
| F= 4.0363 mm, FNO=1.63, FOV=140.17° | | | | | | | | |
| Surface number | Name | Surface type | Y radius | Thickness | Material | Refractive index | Abbe number | Effective focal length |
| | Object side | sphere | infinity | 5000 | | | | |
| 1 | First lens | sphere | 21.744 | 1.00 | glass | 1.755 | 52.34 | -7.205 |
| 2 | | sphere | 4.2806 | 4.50 | | | | |
| 3 | Second lens | sphere | -8.089 | 5.00 | glass | 1.804 | 46.57 | -43.145 |
| 4 | | sphere | -13.444 | 0.10 | | | | |
| 5 | Third lens | sphere | 15.3956 | 2.57 | glass | 1.883 | 39.23 | 18.128 |
| 6 | | sphere | 322.589 | 1.96 | | | | |
| 7 | Aperture | sphere | infinity | 0.06 | | | | |
| 8 | Fourth lens | sphere | 8.326 | 3.25 | glass | 1.437 | 95.10 | 14.416 |
| 9 | | sphere | -23.051 | 0.14 | | | | |

(continued)

| Surface number | Name | Surface type | Y radius | Thickness | Material | Refractive index | Abbe number | Effective focal length |
|---|---|---|---|---|---|---|---|---|
| | | | Fourth embodiment | | | | | |
| | | | F= 4.0363 mm, FNO=1.63, FOV=140.17° | | | | | |
| 10 | Fifth lens | sphere | 8.979 | 2.55 | glass | 1.618 | 63.40 | 40.007 |
| 11 | Sixth lens | sphere | -9.2102 | 0.60 | glass | 1.847 | 23.79 | -13.714 |
| 12 | | sphere | 18.1758 | 1.48 | | | | |
| 13 | Seventh lens | asphere | 11.174 | 2.64 | glass | 1.592 | 60.63 | 24.483 |
| 14 | | asphere | 43.9742 | 0.93 | | | | |
| 15 | Filter | sphere | infinity | 0.40 | glass | 1.523 | 54.500 | |
| 16 | | sphere | infinity | 1.99 | | | | |
| 17 | Protective glass | sphere | infinity | 0.50 | glass | 1.523 | 54.500 | |
| 18 | | sphere | infinity | 0.30 | | | | |
| 19 | Image surface | sphere | infinity | 0.00 | | | | |

Table 4b

| Fourth embodiment | | |
|---|---|---|
| Aspheric coefficient | | |
| Surface number | 13 | 14 |
| K | -1.0237E+01 | -2.6874E+01 |
| A4 | -1.1590E-03 | -7.6011E-04 |
| A6 | -8.8670E-06 | -6.5857E-05 |
| A8 | -1.0400E-05 | 9.6550E-06 |
| A10 | 1.1409E-06 | -1.3232E-06 |
| A12 | -6.7400E-08 | 1.0994E-07 |
| A14 | 1.5215E-09 | -4.5923E-09 |
| A16 | 1.5624E-11 | 7.7884E-11 |

Referring to FIG. 8, it can be seen from (A) a longitudinal spherical aberration diagram, (B) an astigmatism curve diagram, and (C) a distortion diagram in FIG. 8 that, the spherical aberration value, astigmatism, and distortion of the optical lens 100 of the fourth embodiment are well controlled, so that the optical lens 100 of this embodiment has a good imaging quality. In addition, regarding the wavelengths corresponding to the curves in (A) in Figure 8, (B) in Figure 8, and (C) in Figure 8, please refer to the contents described in (A) in Figure 2, (B) in Figure 2, and (C) in Figure 2 in the first embodiment and will not be described again here.

Fifth embodiment

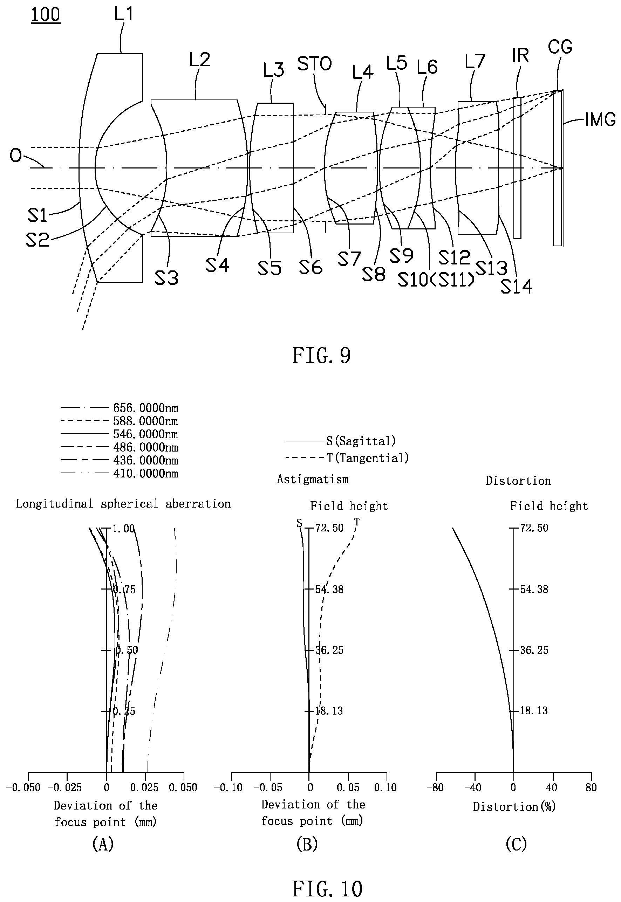

FIG. 9 is a schematic structural diagram of the optical lens 100 of the fifth embodiment. The optical lens 100 sequentially includes a first lens L1, a second lens L2, a third lens L3, an aperture STO, a fourth lens L4, a fifth lens L5, a sixth lens L6, a seventh lens L7, a filter IR, and a protective glass CG along an optical axis O from an object side to an imaging side.

Further, the refractive power of each lens in the fifth embodiment is consistent with the refractive power of each lens in the in the first embodiment, and a surface shape of each lens in the fifth embodiment is consistent with a surface shape of each lens in the first embodiment.

Other parameters of the fifth embodiment are given in Table 5a, and the definition of each parameter can be obtained from the description of the foregoing embodiment and will not be described again here. It can be understood that the units of Y radius, thickness, and effective focal length in Table 5a are all mm, the reference wavelength for the refractive index and Abbe number of each lens in Table 5a is 587.56 nm, and the reference wavelength for the effective focal length of each lens in Table 5a is 546 nm.

In the fifth embodiment, the object side surface S13 and the imaging side surface S14 of the seventh lens L7 are both aspherical. Table 5b shows the cone coefficient and the higher-order term coefficients A4, A6, A8, A10, A12, A14 and A16 that can be used for each aspherical lens in the fifth embodiment.

Table 5a

| Fifth embodiment | | | | | | | | |
|---|---|---|---|---|---|---|---|---|
| F= 4.0367 mm, FNO=1.63, FOV=145° | | | | | | | | |
| Surface number | Name | Surface type | Y radius | Thickness | Material | Refractive index | Abbe number | Effective focal length |
| | Object side | sphere | infinity | 5000 | | | | |
| 1 | First lens | sphere | 21.739 | 1.00 | glass | 1.755 | 52.30 | -7.201 |
| 2 | | sphere | 4.2781 | 4.44 | | | | |
| 3 | Second lens | sphere | -8.064 | 5.00 | glass | 1.804 | 46.60 | -43.082 |
| 4 | | sphere | -13.404 | 0.11 | | | | |
| 5 | Third lens | sphere | 15.4622 | 2.72 | glass | 1.883 | 39.20 | 18.076 |
| 6 | | sphere | 382.467 | 1.99 | | | | |
| 7 | Aperture | sphere | infinity | -0.07 | | | | |
| 8 | Fourth lens | sphere | 8.340 | 3.30 | glass | 1.437 | 95.10 | 14.401 |
| 9 | | sphere | -22.783 | 0.10 | | | | |
| 10 | Fifth lens | sphere | 8.942 | 2.55 | glass | 1.618 | 63.40 | 39.723 |
| 11 | Sixth lens | sphere | -9.2258 | 0.60 | glass | 1.847 | 23.80 | -13.794 |
| 12 | | sphere | 18.3224 | 1.57 | | | | |
| 13 | Seventh lens | asphere | 11.073 | 2.66 | glass | 1.592 | 60.60 | 24.833 |
| 14 | | asphere | 40.4202 | 0.98 | | | | |
| 15 | Filter | sphere | infinity | 0.40 | glass | 1.523 | 54.50 | |
| 16 | | sphere | infinity | 2.03 | | | | |
| 17 | Protective glass | sphere | infinity | 0.50 | glass | 1.523 | 54.50 | |
| 18 | | sphere | infinity | 0.10 | | | | |
| 19 | Image surface | sphere | infinity | 0.00 | | | | |

Table 5b

| Fifth embodiment | | |
|---|---|---|
| Aspheric coefficient | | |
| Surface number | 13 | 14 |
| K | -1.0576E+01 | 6.5284E-01 |
| A4 | -1.1414E-03 | -8.6747E-04 |
| A6 | -1.7557E-05 | -7.1122E-05 |

(continued)

| Fifth embodiment | | |
| --- | --- | --- |
| Aspheric coefficient | | |
| Surface number | 13 | 14 |
| A8 | -1.0081E-05 | 1.0081E-05 |
| A10 | 1.1060E-06 | -1.3573E-06 |
| A12 | -6.4734E-08 | 1.1129E-07 |
| A14 | 1.3802E-09 | -4.5965E-09 |
| A16 | 1.8712E-11 | 7.6972E-11 |

Referring to FIG. 10, it can be seen from (A) a longitudinal spherical aberration diagram, (B) an astigmatism curve diagram, and (C) a distortion diagram in FIG. 10 that, the spherical aberration value, astigmatism, and distortion of the optical lens 100 of the fifth embodiment are well controlled, so that the optical lens 100 of this embodiment has a good imaging quality. In addition, regarding the wavelengths corresponding to the curves in (A) in Figure 10, (B) in Figure 10, and (C) in Figure 10, please refer to the contents described in (A) in Figure 2, (B) in Figure 2, and (C) in Figure 2 in the first embodiment and will not be described again here.

Sixth embodiment

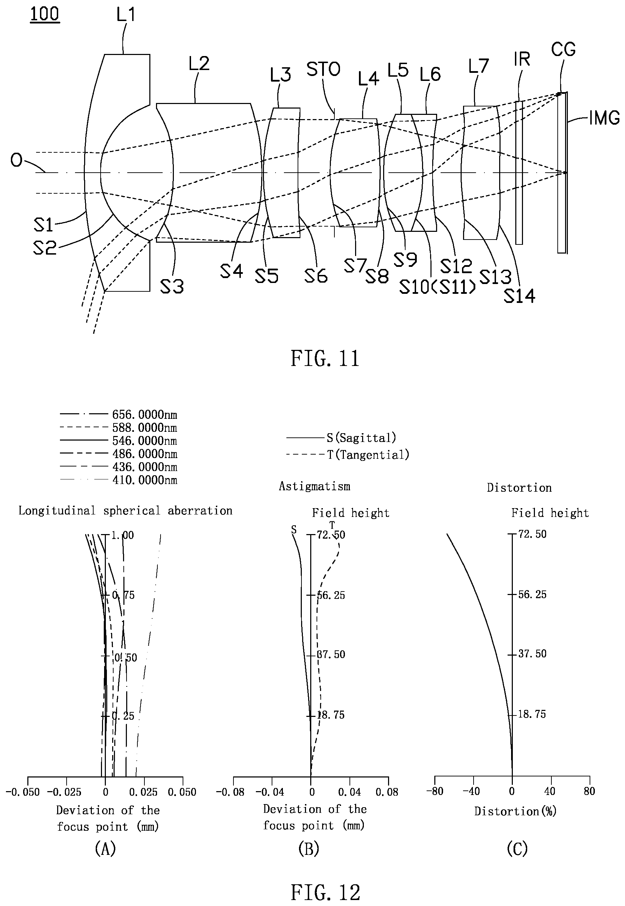

FIG. 11 is a schematic structural diagram of the optical lens 100 of the sixth embodiment. The optical lens 100 sequentially includes a first lens L 1, a second lens L2, a third lens L3, an aperture STO, a fourth lens L4, a fifth lens L5, a sixth lens L6, a seventh lens L7, a filter IR, and a protective glass CG along an optical axis O from an object side to an imaging side.

Further, the refractive power of each lens in the sixth embodiment is consistent with the refractive power of each lens in the in the first embodiment, and a surface shape of each lens in the sixth embodiment is consistent with a surface shape of each lens in the first embodiment.

Other parameters of the sixth embodiment are given in Table 6a, and the definition of each parameter can be obtained from the description of the foregoing embodiment and will not be described again here. It can be understood that the units of Y radius, thickness, and effective focal length in Table 6a are all mm, the reference wavelength for the refractive index and Abbe number of each lens in Table 6a is 587.56 nm, and the reference wavelength for the effective focal length of each lens in Table 6a is 546 nm.

In the sixth embodiment, the object side surface S13 and the imaging side surface S14 of the seventh lens L7 are both aspherical. Table 6b shows the cone coefficient and the higher-order term coefficients A4, A6, A8, A10, A12, A14 and A16 that can be used for each aspherical lens in the fifth embodiment.

Table 6a

| Sixth embodiment | | | | | | | | |
| --- | --- | --- | --- | --- | --- | --- | --- | --- |
| F=4.0472 mm, FNO=1.64, FOV=150° | | | | | | | | |
| Surface number | Name | Surface type | Y radius | Thickness | Material | Refractive index | Abbe number | Effective focal length |
| | Object side | sphere | infinity | 5000 | | | | |
| 1 | First lens | sphere | 21.291 | 1.00 | glass | 1.755 | 52.3 | -7.300 |
| 2 | | sphere | 4.3051 | 4.52 | | | | |
| 3 | Second lens | sphere | -7.965 | 5.50 | glass | 1.7725 | 49.6 | -52.946 |
| 4 | | sphere | -12.861 | 0.09 | | | | |
| 5 | Third lens | sphere | 12.7490 | 2.14 | glass | 1.883 | 39.200 | 18.538 |
| 6 | | sphere | 51.989 | 2.27 | | | | |

(continued)

| Surface number | Name | Surface type | Y radius | Thickness | Material | Refractive index | Abbe number | Effective focal length |
|---|---|---|---|---|---|---|---|---|
| | Sixth embodiment |||||||||
| | F=4.0472 mm, FNO=1.64, FOV=150° |||||||||
| 7 | Aperture | sphere | infinity | -0.26 | | | | |
| 8 | Fourth lens | sphere | 9.153 | 3.09 | glass | 1.437 | 95.100 | 15.859 |
| 9 | | sphere | -25.881 | 0.22 | | | | |
| 10 | Fifth lens | sphere | 8.877 | 2.45 | glass | 1.618 | 63.400 | 40.130 |
| 11 | Sixth lens | sphere | -8.8771 | 0.60 | glass | 1.847 | 23.800 | -14.725 |
| 12 | | sphere | 20.7975 | 1.78 | | | | |
| 13 | Seventh lens | asphere | 11.585 | 2.39 | glass | 1.58569 | 61.14 | 24.473 |
| 14 | | asphere | 54.8889 | 1.01 | | | | |
| 15 | Filter | sphere | infinity | 0.40 | glass | 1.523 | 54.500 | |
| 16 | | sphere | infinity | 2.19 | | | | |
| 17 | Protective glass | sphere | infinity | 0.50 | glass | 1.523 | 54.50 | |
| 18 | | sphere | infinity | 0.10 | | | | |
| 19 | Image surface | sphere | infinity | 0.00 | | | | |

Table 6b

| Surface number | 13 | 14 |
|---|---|---|
| | Sixth embodiment ||| 
| | Aspheric coefficient |||
| K | -1.0065E+01 | 0.0000E+00 |
| A4 | -1.2417E-03 | -9.5586E-04 |
| A6 | -4.4371E-05 | -8.5607E-05 |
| A8 | -2.3261E-06 | 1.2389E-05 |
| A10 | 2.8789E-07 | -1.4755E-06 |
| A12 | -3.3545E-08 | 1.0966E-07 |
| A14 | 2.4129E-09 | -4.1690E-09 |
| A16 | -5.3991E-11 | 6.5564E-11 |

Referring to FIG. 12, it can be seen from (A) a longitudinal spherical aberration diagram, (B) an astigmatism curve diagram, and (C) a distortion diagram in FIG. 12 that, the spherical aberration value, astigmatism, and distortion of the optical lens 100 of the sixth embodiment are well controlled, so that the optical lens 100 of this embodiment has a good imaging quality. In addition, regarding the wavelengths corresponding to the curves in (A) in Figure 12, (B) in Figure 12, and (C) in Figure 12, please refer to the contents described in (A) in Figure 2, (B) in Figure 2, and (C) in Figure 2 in the first embodiment and will not be described again here.

Table 7 shows the values of FOV, TTL/F, TTL/ImgH, ImgH/F, TTL/CT4, CT2/SAG21, F2/CT2, SAG12/SAG11, F1/F, |F56/F|, F123/F, SD32/SD41, SD51/SD42, SD11/ImgH, CT3/CT34, CT4/ET4, ET6/CT6, (CT6+CT7)/CT67, F7/F, R72/R71, FOV*F/ImgH, F*tan(FOV/2)/ImgH, FOV/FNO, FNO, F1/CT1, F3/CT3, F4/CT4, F5/CT5, F6/CT6, F7/CT7, F1/F, F2/F, F3/F, F4/F, F5/F, F6/F, R11/R12, R21/R22, R31/R32, R41/R42, R51/R52 and R61/R62 in the optical lens 100 of the first to sixth embodiments.

Table 7

| | First embodiment | Second embodiment | Third embodiment | Fourth embodiment | Fifth embodiment | Sixth embodiment |
|---|---|---|---|---|---|---|
| FOV | **140.0°** | **140.0°** | **140.1°** | **140.2°** | **145°** | **150°** |
| TTL/F | 7.3943 | 7.4204 | 7.4106 | 7.4282 | 7.4269 | 7.4077 |
| TTL/ImgH | 6.4843 | 6.4685 | 6.4732 | 6.4690 | 6.2813 | 6.0816 |
| ImgH/F | 1.1403 | 1.1471 | 1.1448 | 1.1483 | 1.1824 | 1.2180 |
| TTL/CT4 | 9.1144 | 7.5494 | 9.8308 | 9.2284 | 9.0773 | 9.7144 |
| CT2/SAG21 | -4.9712 | -5.6100 | -5.4163 | -5.3524 | -5.1117 | -5.2862 |
| F2/CT2 | -9.5045 | -8.0393 | -9.6809 | -8.6247 | -8.6166 | -9.6262 |
| SAG12/SAG11 | 2.7567 | 2.6244 | 2.5939 | 2.6310 | 2.5704 | 2.4421 |
| F1/F | -1.7478 | -1.7723 | -1.8072 | -1.7852 | -1.7838 | -1.8038 |
| \|F56/F\| | 53.2626 | 19.9801 | 23.7508 | 48.1321 | 42.5193 | 24.5473 |
| F123/F | -3.8307 | -8.1407 | -31.4884 | -13.4135 | -13.5492 | -29.1997 |
| SD32/SD41 | 1.0977 | 1.0602 | 1.1626 | 1.0634 | 1.0892 | 1.1252 |
| SD51/SD42 | 1.0409 | 1.0902 | 1.0688 | 0.9848 | 0.9895 | 0.9775 |
| SD11/ImgH | 1.4682 | 1.4411 | 1.4870 | 1.4655 | 1.4568 | 1.4599 |
| CT3/CT34 | 0.9105 | 1.7381 | 1.0904 | 1.2712 | 1.4232 | 1.0650 |
| CT4/ET4 | 1.3589 | 1.2857 | 1.3400 | 1.4432 | 1.4112 | 1.3560 |
| ET6/CT6 | 2.5183 | 2.8267 | 2.4893 | 2.5561 | 2.5363 | 2.3846 |
| (CT6+CT7)/CT67 | 1.4784 | 2.5401 | 1.7457 | 2.1889 | 2.0792 | 1.6840 |
| F7/F | 5.2813 | 5.7584 | 6.0710 | 6.0657 | 6.1518 | 6.0469 |
| R72/R71 | 4.5617 | 4.9221 | 4.5844 | 3.9355 | 3.6504 | 4.7380 |
| FOV*F/ImgH | **122.7708°** | **122.0419°** | **122.4047°** | **122.0698°** | **122.6345°** | **123.148°** |
| F*tan(FOV/2)/ImgH | 2.4094 | 2.3951 | 2.4084 | 2.4038 | 2.6824 | 3.0640 |
| FOV/FNO | **85.8896°** | **85.3659°** | **85.4451°** | **85.9939°** | **88.9571°** | **91.4634°** |
| FNO | 1.63 | 1.64 | 1.64 | 1.63 | 1.63 | 1.64 |
| F1/CT1 | -7.0865 | -7.1610 | -7.3116 | -7.2054 | -7.2005 | -7.3004 |
| F3/CT3 | 11.3388 | 9.3772 | 8.6038 | 7.0452 | 6.6370 | 8.6497 |
| F4/CT4 | 3.4318 | 3.8249 | 5.2265 | 4.4373 | 4.3602 | 5.1388 |
| F5/CT5 | 26.5235 | 13.3267 | 16.3383 | 15.6817 | 15.5933 | 16.4004 |
| F6/CT6 | -21.6046 | -23.2022 | -24.4667 | -22.8564 | -22.9896 | -24.5424 |
| F7/CT7 | 11.7833 | 8.2302 | 9.8574 | 9.2652 | 9.3253 | 10.2206 |
| F1/F | -1.7478 | -1.7723 | -1.8072 | -1.7852 | -1.7838 | -1.8038 |
| F2/F | -11.3446 | -9.8804 | -13.1626 | -10.6892 | -10.6725 | -13.0822 |
| F3/F | 6.2970 | 4.7907 | 4.5754 | 4.4912 | 4.4778 | 4.5804 |
| F4/F | 2.7841 | 3.7595 | 3.9398 | 3.5717 | 3.5674 | 3.9185 |
| F5/F | 17.3518 | 9.2623 | 9.8466 | 9.9117 | 9.8405 | 9.9155 |
| F6/F | -3.1970 | -3.4454 | -3.6284 | -3.3976 | -3.4171 | -3.6384 |
| R11/R12 | 5.3134 | 5.0722 | 4.9973 | 5.0797 | 5.0815 | 4.9454 |
| R21/R22 | 0.6122 | 0.5850 | 0.6201 | 0.6017 | 0.6017 | 0.6193 |
| R31/R32 | 0.4680 | 0.0710 | 0.2643 | 0.0477 | 0.0404 | 0.2452 |

(continued)

|  | First embodiment | Second embodiment | Third embodiment | Fourth embodiment | Fifth embodiment | Sixth embodiment |
|---|---|---|---|---|---|---|
| R41/R42 | -0.2821 | -0.4688 | -0.3193 | -0.3612 | -0.3660 | -0.3536 |
| R51/R52 | -0.9173 | -1.0000 | -1.0000 | -0.9749 | -0.9693 | -1.0000 |
| R61/R62 | -0.3546 | -0.4261 | -0.4240 | -0.5067 | -0.5035 | -0.4268 |

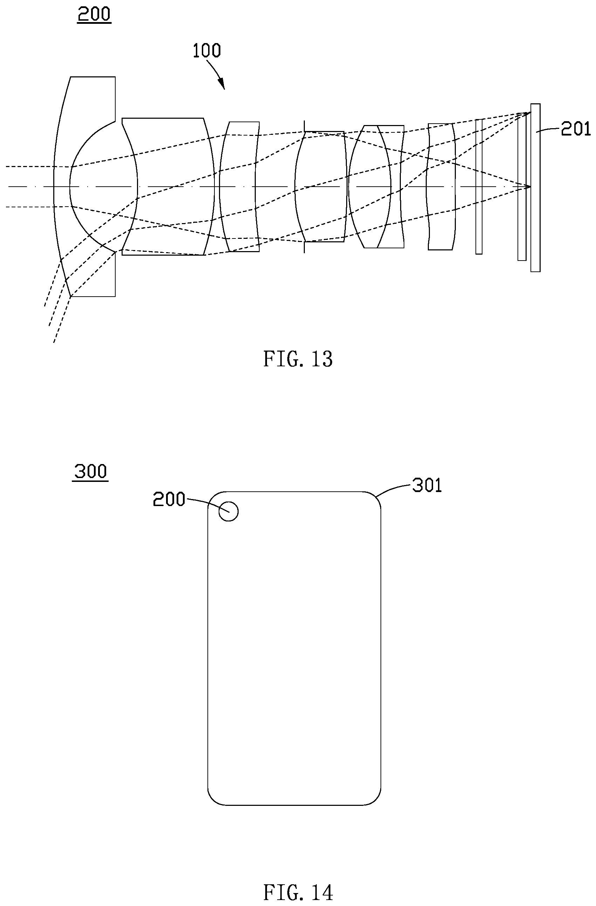

Referring to FIG. 13, the present disclosure also discloses an image module 200. The image module 200 includes a photosensitive chip 201 and the above-mentioned optical lens 100. The photosensitive chip 201 is arranged on the imaging side of the optical lens 100. The optical lens 100 can be used to receive the light signal of the object being photographed and project it to the photosensitive chip 201, and the photosensitive chip 201 can be used to convert the light signal corresponding to the object being photographed into an image signal. The image module 200 with the above-mentioned optical lens 100 can achieve a miniaturized design of the optical lens 100, and at the same time, the optical lens 100 has the characteristic of a large field of view, thereby improving the imaging quality of the optical lens 100.

Referring to FIG. 14, the present disclosure also discloses a terminal device 300. The terminal device 300 includes a housing 301 and the above-mentioned image module 200. The image module 200 is arranged in the housing 301. The terminal device 300 may be, but is not limited to, a mobile phone, a tablet computer, a notebook computer, a smart watch, a monitor, etc. It can be understood that the terminal device 300 with the above-mentioned image module 200 also has all the technical effects of the above-mentioned optical lens 100, that is, it can achieve a miniaturized design of the optical lens 100, and at the same time, the optical lens 100 has the characteristic of a large field of view, thereby improving the imaging quality of the optical lens 100.

It should be noted that the above examples are only used to illustrate the technical solutions of the present application and not to limit them. Although the present application has been described in detail with reference to the preferred embodiments, it should be understood by those skilled in the art that modifications or equivalent substitutions can be made to the technical solutions of the present application without departing from the spirit and scope of the present application.

## Claims

1. An optical lens (100), from an object side to an imaging side along an optical axis (O), sequentially comprising:

a first lens (L1) having negative refractive power, an object side surface (S1) of the first lens (L1) being convex near the optical axis (O), and an imaging side surface (S2) of the first lens (L1) being concave near the optical axis (O);
a second lens (L2) having negative refractive power, an object side surface (S3) of the second lens (L2) being concave near the optical axis (O), and an imaging side surface (S4) of the second lens (L2) being convex near the optical axis (O);
a third lens (L3) having positive refractive power, an object side surface (S5) of the third lens (L3) being convex near the optical axis (O), an imaging side surface (S6) of the third lens (L3) being concave near the optical axis (O);
a fourth lens (L4) having positive refractive power, an object side surface (S7) of the fourth lens (L4) being convex near the optical axis (O), an imaging side surface (S8) of the fourth lens (L4) being convex near the optical axis (O);
a fifth lens (L5) having positive refractive power, an object side surface (S9) of the fifth lens (L5) being convex near the optical axis (O), an imaging side surface (S10) of the fifth lens (L5) being convex near the optical axis (O);
a sixth lens (L6) having negative refractive power, an object side surface (S11) of the sixth lens (L6) is concave near the optical axis (O), and an imaging side surface (S12) of the sixth lens (L6) being concave near the optical axis (O);
a seventh lens (L7) having positive refractive power, an object side surface (S13) of the seventh lens (L7) being convex near the optical axis (O), an imaging side surface (S14) of the seventh lens (L7) being concave near the optical axis (O); and
an image plane (IMG);
the optical lens (100) satisfying following conditional expressions:

$$140° < FOV < 150°, \text{ and } 7.2 < TTL/F < 7.6;$$

wherein, FOV is the maximum field of view of the optical lens (100), TTL is a distance from the object side surface (S1) of the first lens (L1) to the image plane (IMG) of the optical lens (100) along the optical axis (O), and F is an effective focal length of the optical lens (100).

2. The optical lens (100) of claim 1, wherein the optical lens (100) further satisfies following conditional expression:

$$6 < TTL/ImgH < 6.6,$$

wherein, ImgH is a radius of the maximum effective imaging circle on the image plane (IMG) of the optical lens (100).

3. The optical lens (100) of claim 1, wherein the optical lens (100) further satisfies at least one of following conditional expressions:

$$-6 < CT2/SAG21 < -4,$$

$$-10 < F2/CT2 < -8,$$

and

$$2 < SAG12/SAG11 < 3;$$

wherein, CT2 is a thickness of the second lens (L2) at the optical axis (O), SAG21 is a distance from the maximum effective aperture of the object side surface (S3) of the second lens (L2) to an intersection point of the object side surface (S3) of the second lens (L2) and the optical axis (O) along the optical axis (O), F2 is an effective focal length of the second lens (L2), CT2 is the thickness of the second lens (L2) at the optical axis (O), SAG12 is a distance from the maximum effective aperture of the imaging side surface (S2) of the first lens (L1) to an intersection point of the imaging side surface (S2) of the first lens (L1) and the optical axis (O) along the optical axis (O), and SAG11 is a distance from the maximum effective aperture of the object side surface (S1) of the first lens (L1) to an intersection point of the object side surface (S1) of the first lens (L1) and the optical axis (O) along the optical axis (O).

4. The optical lens (100) of claim 1, wherein the optical lens (100) further satisfies at least one of following conditional expressions:

$$|F56/F| > 10,$$

and

$$-40 < F123/F < -1;$$

wherein, F56 is a combined effective focal length of the fifth lens (L5) and the sixth lens (L6), and F123 is a combined effective focal length of the first lens (L1).

5. The optical lens (100) of claim 1, wherein the optical lens (100) further satisfies at least one of following conditional expressions:

$$1 < SD32/SD41 < 1.2,$$

$$0.95 < SD51/SD42 < 1.1,$$

and

$$1.4 < SD11/ImgH < 1.55;$$

wherein, SD32 is half of the maximum effective aperture of the imaging side surface (S6) of the third lens (L3), SD41 is half of the maximum effective aperture of the object side surface (S7) of the fourth lens (L4), SD51 is half of the maximum effective aperture of the object side surface (S9) of the fifth lens (L5), SD42 is half of the maximum effective aperture of the imaging side surface (S8) of the fourth lens (L4), SD11 is half of the maximum effective aperture of the object side surface (S1) of the first lens (L1), and ImgH is the radius of the maximum effective imaging circle on the image plane (IMG) of the optical lens (100).

6. The optical lens (100) of claim 1, wherein the optical lens (100) further satisfies at least one of following conditional expressions:

$$0.9 < CT3/CT34 < 1.8,$$

$$1.2 < CT4/ET4 < 1.5,$$

and

$$2 < ET6/CT6 < 3;$$

wherein, CT3 is a thickness of the third lens (L3) at the optical axis (O), CT34 is a distance between the imaging side surface (S1) of the third lens (L3) and the object side surface (S7) of the fourth lens (L4) at the optical axis (O), CT4 is a thickness of the fourth lens (L4) at the optical axis (O), ET4 is a distance from the maximum effective aperture of the object side surface (S7) of the fourth lens (L4) to the maximum effective aperture of the imaging side surface (S8) of the fourth lens (L4) in a direction of the optical axis (O), ET6 is a distance from the maximum effective aperture of the object side surface (S11) of the sixth lens (L6) to the maximum effective aperture of the imaging side surface (S12) of the sixth lens (L6) in a direction of the optical axis (O), and CT6 is a thickness of the sixth lens (L6) at the optical axis (O).

7. The optical lens (100) of claim 1, wherein the optical lens (100) further satisfies at least one of following conditional expressions:

$$1 < (CT6+CT7)/CT67 < 3,$$

and

$$5 < F7/F < 7$$

wherein, CT6 is a thickness of the sixth lens (L6) at the optical axis (O), CT7 is a thickness of the seventh lens (L7) at the optical axis (O), CT67 is a distance from the imaging side surface (S12) of the sixth lens (L6) to the object side surface (S13) of the seventh lens (L7) along the optical axis (O), and F7 is an effective focal length of the seventh lens (L7).

8. The optical lens (100) of claim 1, wherein the optical lens (100) further satisfies at least one of following conditional expressions:

$$120° < FOV*F/ImgH < 130°,$$

and

$$2 < F*\tan(FOV/2)/ImgH < 3.2,$$

wherein, ImgH is a radius of the maximum effective imaging circle on the image plane (IMG) of the optical lens (100).

9. The optical lens (100) of claim 1, wherein the optical lens (100) further satisfies following conditional expression:

$$1.1 < ImgH/F < 1.3,$$

wherein, ImgH is a radius of the maximum effective imaging circle on the image plane (IMG) of the optical lens (100).

10. The optical lens (100) of claim 1, wherein the optical lens (100) further satisfies following conditional expression:

$$7 < TTL/CT4 < 10,$$

wherein, CT4 is a thickness of the fourth lens (L4) at the optical axis (O).

11. The optical lens (100) of claim 1, wherein the optical lens (100) further satisfies following conditional expression:

$$-2 < F1/F < -1.5,$$

wherein, F1 is an effective focal length of the first lens (L 1).

12. The optical lens (100) of claim 1, wherein the optical lens (100) further satisfies following conditional expression:

$$3 < R72/R71 < 5,$$

wherein, R72 is a curvature radius of the imaging side surface (S14) of the seventh lens (L7) at the optical axis (O), and R71 is a curvature radius of the object side surface (S13) of the seventh lens (L7) at the optical axis (O).

13. The optical lens (100) of claim 1, wherein the optical lens (100) further satisfies following conditional expression:

$$85° < FOV/FNO < 95°,$$

wherein, FNO is an aperture number of the optical lens (100).

14. An image module (200) comprising a photosensitive chip (201) and the optical lens (100) of any one of claims 1 to 13, the photosensitive chip (201) is arranged on the imaging side of the optical lens (100).

15. A terminal device (300) comprising a housing (301) and the image module (200) of claim 14, the image module (200) being arranged in the housing (301).

FIG. 1

FIG. 2

FIG. 3

— · — 656.0000nm
- - - - - 588.0000nm
———— 546.0000nm
— - - - 486.0000nm
— - — 436.0000nm
— · · — 410.0000nm

——— S(Sagittal)
- - - - T(Tangential)

Longitudinal spherical aberration

Astigmatism
Field height

Distortion
Field height

Deviation of the
focus point (mm)

(A)

Deviation of the
focus point (mm)

(B)

Distortion(%)

(C)

FIG. 4

FIG. 5

—·— 656.0000nm
----- 588.0000nm
——— 546.0000nm
—--— 486.0000nm
—·—· 436.0000nm
—··— 410.0000nm

——— S(Sagittal)
----- T(Tangential)

Longitudinal spherical aberration

Astigmatism

Distortion

Deviation of the
focus point (mm)

(A)

Field height

Deviation of the
focus point (mm)

(B)

Field height

Distortion(%)

(C)

FIG. 6

FIG. 7

FIG. 8

FIG. 9

Astigmatism

——— S (Sagittal)
- - - - T (Tangential)

Longitudinal spherical aberration

Field height

Distortion

Field height

Deviation of the
focus point (mm)

(A)

Deviation of the
focus point (mm)

(B)

Distortion (%)

(C)

FIG. 10

FIG. 11

—·—656.0000nm
-----588.0000nm
———546.0000nm
—--486.0000nm
—··—436.0000nm
—···—410.0000nm

———S(Sagittal)
-----T(Tangential)

Longitudinal spherical aberration

Astigmatism

Distortion

Field height

Field height

Deviation of the focus point (mm)

Deviation of the focus point (mm)

Distortion(%)

(A)

(B)

(C)

FIG. 12

200

100

201

FIG. 13

300

200

301

FIG. 14